(19) 

Europäisches
Patentamt
European
Patent Office
Office européen
des brevets

(11) **EP 4 692 215 A1**

(12) **EUROPEAN PATENT APPLICATION**
published in accordance with Art. 153(4) EPC

(43) Date of publication:
**11.02.2026 Bulletin 2026/07**

(21) Application number: 24779787.1

(22) Date of filing: **19.03.2024**

(51) International Patent Classification (IPC):
*C08L 23/26* (2025.01)   *C08F 2/44* (2006.01)
*C08F 8/46* (2006.01)   *C08F 255/02* (2006.01)
*C08K 5/19* (2006.01)   *C08K 5/101* (2006.01)
*C08L 71/02* (2006.01)   *C09D 4/02* (2006.01)
*C09D 7/63* (2018.01)   *C09D 11/00* (2014.01)
*C09D 151/06* (2006.01)   *C09J 4/02* (2006.01)
*C09J 151/06* (2006.01)

(52) Cooperative Patent Classification (CPC):
**C08F 2/44; C08F 8/46; C08F 255/02; C08K 5/101;
C08K 5/19; C08L 23/26; C08L 71/02; C09D 4/00;
C09D 7/63; C09D 11/00; C09D 151/06; C09J 4/00;
C09J 151/06**

(86) International application number:
**PCT/JP2024/010867**

(87) International publication number:
**WO 2024/203664 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 JP 2023055922**

(71) Applicant: **TOYOBO MC Corporation
Osaka-shi, Osaka 530-0001 (JP)**

(72) Inventors:
• **YAMASAKI, Hokuto
Takasago-shi, Hyogo 676-0082 (JP)**
• **KASHIHARA, Kenji
Takasago-shi, Hyogo 676-0082 (JP)**

(74) Representative: **Vossius & Partner
Patentanwälte Rechtsanwälte mbB
Siebertstraße 3
81675 München (DE)**

(54) **MODIFIED POLYOLEFIN RESIN COMPOSITION AND USE FOR SAID RESIN COMPOSITION**

(57) The present invention provides a modified polyolefin resin composition having sufficient fluidity within a specific temperature range, sufficient adhesion to polyolefin substrates, excellent adhesion to plastic materials, and sufficient antistatic performance. Specifically, the present invention provides a modified polyolefin resin composition comprising an acid-modified polyolefin resin (A), a polyetheramine (B), a compound having a polymerizable unsaturated group (C), and an ionic liquid (D).

**EP 4 692 215 A1**

**Description**

Technical Field

The present invention relates to a modified polyolefin resin composition and use of the resin composition.

Background Art

Conventionally, polypropylene, polyethylene, ethylene-propylene copolymers, ethylene-propylene-diene copolymers, polybutene, poly(4-methyl-1-pentene), and other polyolefin resins are used in the fields of automotive parts, electrical parts, building materials, packaging films, and the like because they are relatively inexpensive and have excellent properties, such as chemical resistance, water resistance, and heat resistance.

On the other hand, polyolefin resins are difficult to paint, bond, or the like because they are crystalline and nonpolar.

Accordingly, chlorinated polyolefins, which have strong adhesion to polyolefin resins, are widely used as binder resins (e.g., PTL 1 and 2).

From the viewpoint of improving the adherence properties (adhesion) of chlorinated polyolefin resins to polyolefin substrates and from the viewpoint of improving the adherence properties (adhesion) to plastics other than polyolefin resins, mixtures of chlorinated polyolefins with acrylic, urethane, or polyester resins, and binder compositions in which these resins are graft-polymerized onto chlorinated polyolefins, are also used (e.g., PTL 3 and 4).

Additionally, it is common practice to knead an antistatic agent into polypropylene resins and mold them so as to suppress static electricity generation (e.g., PTL 5 and 6).

Citation List

Patent Literature

PTL 1: JPS59-75958A
PTL 2: JPS60-99138A
PTL 3: JPH06-16746A
PTL 4: JPH08-12913A
PTL 5: JP2009-108259A
PTL 6: JP2020-33483A

Summary of Invention

Technical Problem

However, the mixtures and binder compositions described in PTL 3 and 4 are generally used dissolved in organic solvents, such as toluene and xylene, and therefore large amounts of organic solvents are released into the atmosphere during application, which is undesirable from the viewpoint of the environment, hygiene, etc.

Furthermore, the mixtures and binder compositions described in PTL 3 and 4 have problems with poor fluidity and poor adhesion to polyolefin substrates.

Furthermore, since polyolefin substrates and plastic materials, such as polyethylene terephthalate (PET) and ABS, basically do not have excellent electrical conductivity, a problem arises in which static electricity causes dust and dirt to adhere to the molded products, diminishing their appearance.

When a polypropylene film containing the antistatic agent described in PTL 5 is laminated with another film using an adhesive, a problem arises because the antistatic agent is adsorbed by the adhesive, inhibiting antistatic performance.

When a molded product obtained by using the antistatic agent described in PTL 6 is painted or printed, a problem arises because adhesion to the paint or printing ink decreases.

The present invention was made in consideration of the above, and an object thereof is to provide a modified polyolefin resin composition having sufficient fluidity within a specific temperature range, sufficient adhesion to polyolefin substrates, excellent adhesion to plastic materials, and sufficient antistatic performance.

Solution to Problem

As a result of repeated research on dispersing and/or dissolving an acid-modified polyolefin resin in a compound having a polymerizable unsaturated group in order to achieve the above object, the present inventors found that the object can be achieved by a modified polyolefin resin composition comprising an acid-modified polyolefin resin, a polyetheramine, a compound having a polymerizable unsaturated group, and an ionic liquid. The present invention has thus been accomplished.

The present invention encompasses, for example, the subject matter set forth in the following item.

Item 1. A modified polyolefin resin composition comprising an acid-modified polyolefin resin (A), a polyetheramine (B), a compound having a polymerizable unsaturated group (C), and an ionic liquid (D).

Advantageous Effects of Invention

The modified polyolefin resin composition of the present invention has sufficient fluidity within a specific temperature range, sufficient adhesion to polyolefin substrates, excellent adhesion to plastic materials, and sufficient antistatic performance. The modified polyolefin resin composition of the present invention exhibits sufficient fluidity within a specific temperature range, and thus can be suitably used as a liquid modified polyolefin resin composition for various applications.

Description of Embodiments

Preferred embodiments of the present invention will be described in detail below. The following description of the constituent requirements may be based on representative embodiments and specific examples; however, the present invention is not limited to such embodiments.

In the present specification, the terms "comprise" and "contain" include the concepts of comprising, containing, consisting essentially of, and consisting of.

In the numerical ranges described in stages in the present specification, the upper or lower limit value of a numerical range of a certain stage can be freely combined with the upper or lower limit value of a numerical range of another stage. In any numerical range described in the present specification, the upper or lower limit value of the numerical range may be replaced with a value shown in the Examples or a value that can be unambiguously derived from the Examples. Furthermore, in the present specification, a numerical value connected with "to" means a numerical range including the numerical values before and after "to" as the lower and upper limit values.

In the present specification, "A and/or B" means "one of A or B" or "both A and B," and specifically means "A," "B," or "A and B."

In the present specification, "n-" means "normal," "i-" or "iso-" means "iso," and "tert-" or "t-" means "tertiary."

In the present specification, "(meth)acrylic" encompasses both acrylic and methacrylic, and "(meth)acrylate" encompasses both acrylate and methacrylate.

In the present specification, the "acryloyl group" is represented by "$CH_2=CHC(=O)-$," the "methacryloyl group" is represented by "$CH_2=C(CH_3)C(=O)-$, " the "acryloyloxy group" is represented by "$CH_2=CHC(=O)O-$," and the "methacryloyloxy group" is represented by "$CH_2=C(CH_3)C(=O)O-$."

In the present specification, "cation" refers to a positively charged single atom or a positively charged group of atoms. In the present specification, "anion" refers to a negatively charged single atom or a negatively charged group of atoms.

Modified Polyolefin Resin Composition

The modified polyolefin resin composition of the present invention comprises, as essential components, an acid-modified polyolefin resin (A), a polyetheramine (B), a compound having a polymerizable unsaturated group (C), and an ionic liquid (D).

In one embodiment, the modified polyolefin resin composition generally has sufficient fluidity within the range of 25°C or higher and 80°C or lower. In the present specification, resin compositions with fluidity refer to, for example, uniform liquid compositions that do not contain coarse resin particles, aggregates, etc.

In one embodiment, the modified polyolefin resin composition is generally a resin composition that flows when placed in a glass bottle and tilted within the range of 25°C or higher and 80°C or lower. In one embodiment, resin compositions with fluidity generally also include resin compositions that flow upon receiving mechanical shear within the range of 25°C or higher and 80°C or lower.

In one embodiment, the total content ratio of the acid-modified polyolefin resin (A), the polyetheramine (B), the compound having a polymerizable unsaturated group (C), and the ionic liquid (D) to the total mass of the modified polyolefin resin composition is preferably in the order of more than 50 mass%, 55 mass% or more, 60 mass% or more, 65 mass% or more, 70 mass% or more, 75 mass% or more, 80 mass% or more, 85 mass% or more, 90 mass% or more, 92.5 mass% or more, 95 mass% or more, 97.5 mass% or more, 99 mass% or more, 99.5 mass% or more, 99.9 mass% or more, 99.95 mass% or more, and 99.99 mass% or more.

Acid-Modified Polyolefin Resin (A)

The present invention comprises an acid-modified polyolefin resin (A). The acid-modified polyolefin resin (A) is a polymer obtained by graft-polymerization of an $\alpha,\beta$-unsaturated carboxylic or an acid anhydride thereof onto a polyolefin resin. In other words, the acid-modified polyolefin resin (A) is a graft polymer having a structure with an $\alpha,\beta$-unsaturated carboxylic or an acid anhydride thereof grafted to a polyolefin resin.

The polyolefin resin generally has an $\alpha$-olefin-derived structural unit. Examples of $\alpha$-olefins include $\alpha$-olefins having 2 to 20 (2, 3, 4, 5, 6, 7, 8, 9, 10, 11, 12, 13, 14, 15, 16, 17, 18, 19, or 20) carbon atoms, such as ethylene, propylene, 1-butene, isobutene, 1-pentene, 4-methyl-1-pentene, 1-hexene, 1-heptene, 1-octene, 1-decene, 1-dodecene, 1-tetradecene, 1-hexadecene, 1-octadecene, and 1-eicosene.

The polyolefin resin may be an olefin polymer including a single $\alpha$-olefin-derived structural unit or a copolymer of olefin polymers including two or more $\alpha$-olefin-derived structural units.

In one embodiment, the polyolefin resin is generally a petroleum-derived polyolefin resin. Petroleum-derived polyolefin resins are polyolefin resins synthesized from petroleum-derived olefins.

Petroleum-derived olefins are olefins produced by thermal cracking of petrochemical feedstocks such as naphtha, ethane, liquefied petroleum gas (LPG), natural gas liquid (NGL), and gas oil.

In one embodiment, examples of petroleum-derived polyolefin resins include homopolypropylene (a propylene homopolymer), a propylene-$\alpha$-olefin copolymer, homopolyethylene (an ethylene homopolymer), an ethylene-$\alpha$-olefin copolymer, poly-1-butene, a 1-butene-$\alpha$-olefin copolymer, and the like. These polyolefin resins can be used alone or in a combination of two or more. In one embodiment, preferred among these polyolefin resins are homopolypropylene and/or a propylene-$\alpha$-olefin copolymer.

In one embodiment, the acid-modified polyolefin resin (A) is preferably a graft polymer having a structure with an $\alpha,\beta$-unsaturated carboxylic or an acid anhydride thereof grafted to homopolypropylene or a propylene-$\alpha$-olefin copolymer.

The propylene-$\alpha$-olefin copolymer refers to a copolymer of propylene and an $\alpha$-olefin. Examples of $\alpha$-olefins include ethylene and $\alpha$-olefins having 4 to 20 (4, 5, 6, 7, 8, 9, 10, 11, 12, 13, 14, 15, 16, 17, 18, 19, or 20) carbon atoms, such as 1-butene, isobutene, 1-pentene, 4-methyl-1-pentene, 1-hexene, 1-heptene, 1-octene, 1-decene, 1-dodecene, 1-tetradecene, 1-hexadecene, 1-octadecene, and 1-eicosene. These $\alpha$-olefins can be used alone or in a combination of two or more.

In one embodiment, the content of the propylene component in the propylene-$\alpha$-olefin copolymer is preferably 50 mol% or more, more preferably 60 mol% or more, and even more preferably 70 mol% or more. In one embodiment, when the content of the propylene component in the propylene-$\alpha$-olefin copolymer is 50 mol% or more, the adhesion of the modified polyolefin resin composition to polyolefin substrates (particularly polypropylene substrates) and plastic materials (particularly PET and ABS) is further improved.

The ethylene-$\alpha$-olefin copolymer refers to a copolymer of ethylene and an $\alpha$-olefin. Examples of $\alpha$-olefins include $\alpha$-olefins having 3 to 20 (3, 4, 5, 6, 7, 8, 9, 10, 11, 12, 13, 14, 15, 16, 17, 18, 19, or 20) carbon atoms, such as propylene, 1-butene, isobutene, 1-pentene, 4-methyl-1-pentene, 1-hexene, 1-heptene, 1-octene, 1-decene, 1-dodecene, 1-tetradecene, 1-hexadecene, 1-octadecene, and 1-eicosene. These $\alpha$-olefins can be used alone or in a combination of two or more.

In one embodiment, the content of the ethylene component in the ethylene-$\alpha$-olefin copolymer is preferably 75 mol% or more. When the content of the ethylene component in the ethylene-$\alpha$-olefin copolymer is 75 mol% or more, the adhesion of the modified polyolefin resin composition to polyolefin substrates (particularly polyethylene substrates) and plastic materials (particularly PET and ABS) is further improved.

The 1-butene-$\alpha$-olefin copolymer refers to a copolymer of 1-butene and an $\alpha$-olefin. Examples of $\alpha$-olefins include ethylene, propylene, and $\alpha$-olefins having 5 to 20 (5, 6, 7, 8, 9, 10, 11, 12, 13, 14, 15, 16, 17, 18, 19, or 20) carbon atoms, such as 1-pentene, 4-methyl-1-pentene, 1-hexene, 1-heptene, 1-octene, 1-decene, 1-dodecene, 1-tetradecene, 1-hexadecene, 1-octadecene, and 1-eicosene. These $\alpha$-olefins can be used alone or in a combination of two or more.

In one embodiment, the content of the 1-butene component in the 1-butene-$\alpha$-olefin copolymer is preferably 65 mol% or more. When the content of the 1-butene component in the 1-butene-$\alpha$-olefin copolymer is 65 mol% or more, the adhesion of the modified polyolefin resin composition of this embodiment to polyolefin substrates (particularly polypropylene substrates or poly-1-butene substrates) and plastic materials (particularly PET and ABS) is further improved.

In one embodiment, the total content of the $\alpha,\beta$-unsaturated carboxylic acid and the anhydride component thereof in the acid-modified polyolefin resin (A) is preferably 0.5 to 10 mass%, more preferably 0.7 to 6 mass%, even more preferably 0.8 to 3 mass%, and still more preferably 1 to 2 mass%. In one embodiment, when the total content of the $\alpha,\beta$-

unsaturated carboxylic acid and the anhydride component thereof in the acid-modified polyolefin resin (A) is within the range of 0.5 to 10 mass%, the fluidity of the modified polyolefin resin composition is further improved.

In one embodiment, the polyolefin resin can be a biobased polyolefin resin instead of a petroleum-derived polyolefin resin. The term "biobased polyolefin resin" refers to a polyolefin resin produced from biological resources (biomass). The term "biomass" refers to materials made from renewable biological organic resources, excluding fossil resources.

When using a biobased polyolefin resin, preferably, the polyolefin resin has a propylene structural unit. When using a biobased polyolefin resin, the biobased content of the polyolefin resin is generally 25% or more, preferably 27% or more, and more preferably 30% or more. The upper limit of the biobased content is not particularly limited as long as it is 100% or less. The biobased content of the polyolefin resin can be calculated from the carbon-14 isotope content measured in accordance with ASTM D 6866, for example.

Examples of the α,β-unsaturated carboxylic acid or the acid anhydride thereof to be graft-polymerized onto polyolefin include maleic acid, maleic anhydride, fumaric acid, citraconic acid, citraconic anhydride, mesaconic acid, itaconic acid, itaconic anhydride, aconitic acid, aconitic anhydride, himic anhydride, and the like. Preferred among these α,β-unsaturated carboxylic acids or acid anhydrides thereof are maleic acid, maleic anhydride, and itaconic anhydride; and more preferred are maleic acid and maleic anhydride.

In one embodiment, the acid value of each of the α,β-unsaturated carboxylic acid and the anhydride component thereof in the acid-modified polyolefin resin (A) is preferably 1 to 100 mgKOH/g, more preferably 5 to 50 mgKOH/g, even more preferably 10 to 40 mgKOH/g, and still more preferably 15 to 30. When the acid value of each of the α,β-unsaturated carboxylic acid and the anhydride component thereof in the acid-modified polyolefin resin (A) is within the range of 1 to 100 mgKOH/g, the fluidity of the modified polyolefin resin composition is further improved.

The acid value of each of the α,β-unsaturated carboxylic acid and the anhydride component thereof in the acid-modified polyolefin resin (A) can be determined using a Fourier transform infrared spectrophotometer (FT-IR) and the following formula (i) using the coefficient (f) derived from a calibration curve prepared with a chloroform solution of maleic anhydride and the absorbance (I) of the stretching peak (1780 cm$^{-1}$) of the carbonyl (C=O) bonds in succinic anhydride in an acid-modified polyolefin solution.

Acid value (mgKOH/g) = absorbance (I) × coefficient (f) × 2 × molecular weight of potassium hydroxide × 1000 (mg)/molecular weight of succinic anhydride          Formula (1)

In formula (i), the molecular weight of succinic anhydride is 100.07, and the molecular weight of potassium hydroxide is 56.11.

Known methods can be widely used to graft-polymerize an α,β-unsaturated carboxylic acid or an anhydride thereof onto polyolefin. Examples of such methods include a method of heating and melting a polyolefin at a temperature equal to or higher than its melting point in the presence of a radical generator to allow reaction with an α,β-unsaturated carboxylic acid or an anhydride thereof (melting method), and a method of heating and stirring a polyolefin that has been dissolved in an organic solvent in the presence of a radical generator to allow reaction with an α,β-unsaturated carboxylic acid or an anhydride thereof (solution method).

In one embodiment, the acid-modified polyolefin resin (A) may be an acid-modified chlorinated polyolefin resin that has been further chlorinated. As the method of chlorination, for example, chlorine gas is blown into an acid-modified polyolefin resin to introduce chlorine atoms. More specifically, chlorination can be carried out by dispersing or dissolving an acid-modified polyolefin resin in a solvent as required, then blowing chlorine gas thereinto in the presence of a catalyst or under ultraviolet irradiation, under elevated or normal pressure (atmospheric pressure) in a temperature range of 50 to 150°C.

Examples of the solvent used in chlorination include water and chlorinated solvents (e.g., chloroform, methylene chloride, and carbon tetrachloride), with chlorinated solvents being preferred. The chlorinated solvent may be distilled off under reduced pressure at the end of chlorination, or may be replaced with another organic solvent.

Examples of the catalyst used in chlorination include radical initiators. Examples of radical initiators include tert-butyl peroxy-2-ethylhexanoate, tert-butyl peroxyoctoate, di-tert-butyl peroxide, dicumyl peroxide, and the like.

In one embodiment, when the acid-modified polyolefin resin (A) is chlorinated, the chlorine content of the acid-modified chlorinated polyolefin resin is preferably 5 mass% or more, more preferably 8 mass% or more, even more preferably 10 mass% or more, particularly preferably 12 mass% or more, and most preferably 14 mass% or more. When the chlorine content of the acid-modified chlorinated polyolefin resin is 5 mass% or more, the solution stability is better, facilitating the emulsification of the acid-modified chlorinated polyolefin resin.

In one embodiment, when the acid-modified polyolefin resin (A) is chlorinated, the chlorine content of the acid-modified chlorinated polyolefin resin is preferably 40 mass% or less, more preferably 38 mass% or less, even more preferably 35 mass% or less, particularly preferably 32 mass% or less, and most preferably 30 mass% or less. When the chlorine content of the acid-modified chlorinated polyolefin resin is 40 mass% or less, the crystallinity of the acid-modified chlorinated polyolefin resin is increased, further improving adhesion to polyolefin substrates (particularly polypropylene substrates) and plastic materials (particularly PET and ABS).

In one embodiment, when the acid-modified polyolefin resin (A) is chlorinated, the chlorine content of the acid-modified chlorinated polyolefin resin is preferably 5 mass% or more and 40 mass% or less, more preferably 8 mass% or more and 38 mass% or less, even more preferably 10 mass% or more and 35 mass% or less, still more preferably 12 mass% or more and 32 mass% or less, and particularly preferably 14 mass% or more and 30 mass% or less.

The chlorine content of the acid-modified chlorinated polyolefin resin can be measured in accordance with JIS K-7229-1995. Specifically, the chlorine content can be measured using the "oxygen flask combustion method," in which the acid-modified chlorinated polyolefin resin is burned in an oxygen atmosphere, the generated chlorine gas is absorbed with water, and the chlorine content is determined by titration.

In one embodiment, the melting point of the acid-modified polyolefin resin (A) is preferably 90°C or lower, more preferably 85°C or lower, and particularly preferably 80°C or lower. When the melting point of the acid-modified polyolefin resin (A) is 90°C or lower, adhesion to polyolefin substrates (particularly polypropylene substrates) is further improved.

In one embodiment, the melting point of the acid-modified polyolefin resin (A) is preferably 50°C or higher, more preferably 55°C or higher, and particularly preferably 60°C or higher. When the melting point of the acid-modified polyolefin resin (A) is 50°C or higher, adhesion to polyolefin substrates (particularly polypropylene substrates) is further improved.

The melting point of the acid-modified polyolefin resin (A) can be measured with a differential scanning calorimeter (DSC) in accordance with JIS K 7121-2012. Specifically, with a DSC meter, about 5 mg of a sample is maintained in a heated and melted state at 150°C for 10 minutes and then cooled at a rate of 10°C/minute until the sample is stabilized and maintained at -50°C. Thereafter, the sample is further heated to 150°C at a rate of 10°C/minute, and the peak melting temperature at which the sample is melted is measured and evaluated as the melting point.

In one embodiment, the weight average molecular weight (Mw) of the acid-modified polyolefin resin (A) is preferably 3000 to 200000, more preferably 10000 to 150000, even more preferably 20000 to 120000, still more preferably 30000 to 100000, and particularly preferably 40000 to 90000. When the weight average molecular weight (Mw) of the acid-modified polyolefin resin (A) is within the range of 3000 to 200000, good fluidity is ensured. In addition, when the weight average molecular weight (Mw) is within the range of 3000 to 200000, the cohesive force of the acid-modified polyolefin resin (A) is further improved, and adhesion to polyolefin substrates (particularly polypropylene substrates) and plastic materials (particularly PET and ABS) is further improved. The weight average molecular weight (Mw) of the acid-modified polyolefin resin (A) can be measured by gel permeation chromatography (GPC). The specific measurement method will be explained in the Examples described below.

In one embodiment, the acid-modified polyolefin resin (A) may be further copolymerized with a radically polymerizable monomer as long as the effects of the present invention are not impaired. The content of the radically polymerizable monomer is generally 40 parts by mass or less, preferably 20 parts by mass or less, more preferably 5 parts by mass or less, and even more preferably 1 part by mass or less, per 100 parts by mass of the acid-modified polyolefin resin (A).

The form in which the acid-modified polyolefin resin (A) is copolymerized with a radically polymerizable monomer is not limited. Examples of the form of copolymerization include random copolymerization, block copolymerization, graft copolymerization (graft modification), and the like.

Examples of radically polymerizable monomers include (meth)acrylic compounds, vinyl compounds, and the like. (Meth)acrylic compounds refer to compounds containing at least one (meth)acryloyl group (an acryloyl group and/or a methacryloyl group) in the molecule.

Examples of radically polymerizable monomers include (meth)acrylic acid, methyl (meth)acrylate, ethyl (meth) acrylate, n-butyl (meth)acrylate, cyclohexyl (meth)acrylate, hydroxyethyl (meth) acrylate, isobornyl (meth)acrylate, glycidyl (meth)acrylate, octyl (meth)acrylate, lauryl (meth)acrylate, tridecyl (meth)acrylate, stearyl (meth)acrylate, cyclohexyl (meth)acrylate, benzyl (meth)acrylate, phenyl (meth)acrylate, dimethylaminoethyl (meth)acrylate, diethylaminoethyl (meth)acrylate, 2-hydroxyethyl (meth)acrylate, N,N-dimethylaminoethyl (meth)acrylate, acetoacetoxyethyl (meth)acrylate, N-methyl(meth)acrylamide, N-ethyl(meth)acrylamide, N-propyl(meth)acrylamide, N-isopropyl(meth)acrylamide, N-butyl(meth)acrylamide, N-isobutyl(meth)acrylamide, N-t-butyl(meth)acrylamide, N,N-dimethyl(meth)acrylamide, N,N-dimethylaminopropyl (meth)acrylamide, N,N-methylene-bis(meth)acrylamide, N-methylol(meth)acrylamide, hydroxyethyl(meth)acrylamide, (meth)acryloylmorpholine, n-butyl vinyl ether, 4-hydroxybutyl vinyl ether, dodecyl vinyl ether, and the like. Preferred among these are methyl (meth)acrylate, ethyl (meth)acrylate, cyclohexyl (meth)acrylate, and lauryl (meth)acrylate; and more preferred are these methacrylates, i.e., methyl methacrylate, ethyl methacrylate, cyclohexyl methacrylate, and lauryl methacrylate. These radically polymerizable monomers can be used alone or in a combination of two or more.

In one embodiment, the content of the acid-modified polyolefin resin (A) is preferably 5 to 120 parts by mass, more preferably 10 to 90 parts by mass, more preferably 12.5 to 70 parts by mass, even more preferably 15 to 50 parts by mass, still more preferably 17.5 to 40 parts by mass, and particularly preferably 20 to 35 parts by mass, per 100 parts by mass of the compound having a polymerizable unsaturated group (C).

In one embodiment, the content ratio of the acid-modified polyolefin resin (A) to the total mass of the modified polyolefin resin composition is preferably 1 to 60 mass%, more preferably 4 to 50 mass%, even more preferably 7 to 40 mass%, still more preferably 10 to 35 mass%, and particularly preferably 15 to 30 mass%, from the viewpoint of maintaining better fluidity of the modified polyolefin resin composition and further improving adhesion to polyolefin substrates (particularly polypropylene substrates) and plastic materials (particularly PET and ABS).

Polyetheramine (B)

The present invention contains a polyetheramine (B). The polyetheramine (B) is generally a compound having a polyether chain and an amino group.

In one embodiment, preferably, the polyetheramine (B) has a polyether chain, wherein the polyether chain has a structure comprising at least one selected from the group consisting of:

a structure represented by formula 1: $-(O-CH_2CH_2)x-$, wherein x is an integer from 2 to 120,
a structure represented by formula 2-1: $-(O-CH_2CH(CH_3))y_1-$, wherein $y_1$ is an integer from 2 to 90,
a structure represented by formula 2-2: $-(O-CH_2CH_2CH_2)y_2-$, wherein $y_2$ is an integer from 2 to 90,
a structure represented by formula 3-1: $-(O-CH_2CH_2CH_2CH_2)z_1-$, wherein $z_1$ is an integer from 2 to 80,
a structure represented by formula 3-2: $-(O-CH(CH_3)CH_2CH_2)z_2-$, wherein $z_2$ is an integer from 2 to 80,
a structure represented by formula 3-3: $-(O-CH_2CH(CH_3)CH_2)Z_3-$, wherein $z_3$ is an integer from 2 to 80, and
a structure represented by formula 3-4: $-(O-CH_2CH_2CH(CH_3))z_4-$, wherein $z_4$ is an integer from 2 to 80.

In one embodiment, more preferably, the polyetheramine (B) has a polyether chain, wherein the polyether chain has a structure comprising at least one selected from the group consisting of:

a structure represented by formula 1: $-(O-CH_2CH_2)x-$, wherein x is an integer from 2 to 120,
a structure represented by formula 2-1: $-(0-CH_2CH(CH_3))y_1-$, wherein $y_1$ is an integer from 2 to 90, and
a structure represented by formula 3-1: $-(O-CH_2CH_2CH_2CH_2)z_1-$, wherein $z_1$ is an integer from 2 to 80.

In one embodiment, even more preferably, the polyetheramine (B) is a compound represented by the following formula 1A:

$$R^1-(O-R^2)_a-R^3 \qquad \text{Formula 1A}$$

wherein $R^1$ and $R^3$ each independently represent an amino group or a linear or branched alkyl group having 1 to 10 (1, 2, 3, 4, 5, 6, 7, 8, 9, or 10) carbon atoms and optionally having an amino group, $R^2$ represents a linear or branched alkylene group having 2 to 4 (2, 3, or 4) carbon atoms, and
a is an integer from 1 to 120.

In formula 1A, examples of the alkyl group having 1 to 10 (1, 2, 3, 4, 5, 6, 7, 8, 9, or 10) carbon atoms include methyl, ethyl, n-propyl, isopropyl, n-butyl, isobutyl, sec-butyl, tert-butyl, n-hexyl, n-heptyl, n-octyl, n-nonyl, and n-decyl.

In formula 1A, the linear or branched alkylene group having 2 to 4 (2, 3, or 4) carbon atoms is preferably an ethylene group ($-CH_2CH_2-$), a methylethylene group ($-CH_2CH(CH_3-)$), an n-propylene group ($-CH_2CH_2CH_2-$), a 1-methylpropylene group ($-CH(CH_3)CH_2CH_2-$), a 2-methylpropylene group, ($-CH_2CH(CH_3)CH_2-$), a 3-methylpropylene group ($-CH_2CH_2CH(CH_3)-$), or an n-butylene group ($-CH_2CH_2CH_2CH_2-$).

In formula 1A, preferably, $R^1$ represents a linear or branched alkyl group having 1 to 10 (1, 2, 3, 4, 5, 6, 7, 8, 9, or 10) carbon atoms, $R^2$ represents a linear or branched alkylene group having 2 to 4 (2, 3, or 4) carbon atoms, $R^3$ represents an amino group, and a is an integer from 1 to 120.

In one embodiment, preferably, the polyetheramine (B) has a primary amino group or a secondary amino group at one end thereof and the polyetheramine (B) has a weight average molecular weight (Mw) of 200 to 50000, from the viewpoint of stably dissolving and/or dispersing the acid-modified polyolefin resin (A) in the compound having a polymerizable unsaturated group (C). In one embodiment, more preferably, the polyetheramine (B) has a primary amino group or a secondary amino group at one end thereof and the polyetheramine (B) has a weight average molecular weight (Mw) of 300 to 10000. In one embodiment, even more preferably, the polyetheramine (B) has a primary amino group at one end thereof and the polyetheramine (B) has a weight average molecular weight (Mw) of 500 to 5000.

In one embodiment, the weight average molecular weight (Mw) of the polyetheramine (B) is generally 200 to 50000, preferably 300 to 20000, more preferably 350 to 10000, even more preferably 450 to 7000, and particularly preferably 500 to 5000.

In one embodiment, the weight average molecular weight (Mw) of the polyetheramine (B) can be measured by GPC and converted from the calibration curve of polystyrene. The GPC measurement is carried out by a conventionally known method using a commercially available device with THF or the like as a solvent.

In one embodiment, the HLB value of the polyetheramine (B) is preferably 2 to 20, more preferably 5 to 19, and even more preferably 8 to 18. When the HLB value is within the range of 2 to 20, it is possible to maintain better fluidity of the modified polyolefin resin composition.

The HLB value is a value that indicates the degree of hydrophilicity or lipophilicity (hydrophobicity) of the polyetheramine (B). The HLB value is a value determined by the Griffin method. In the Griffin method, the HLB value is calculated based on the following formula 4:

HLB value = 20 × total formula weight of hydrophilic part/molecular weight          Formula 4.

In one embodiment, the polyetheramine (B) can be bonded to the acid-modified polyolefin resin (A) by various reaction forms. Examples of such reaction forms include reaction forms that form covalent and/or ionic bonds. More specific examples include an amidation reaction between the carboxylic anhydride group and the primary or secondary amino group, an imidization reaction, and a neutralization reaction between the carboxylic acid group and the primary or secondary amino group.

As the polyetheramine (B), known commercial products can be widely used. Examples of commercial products of the polyetheramine (B) include the following manufactured by Huntsman:

JEFFAMINE M-600 (MW = 600, HLB value = 2.1),
JEFFAMINE M-1000 (MW = 1000, HLB value = 16.1),
JEFFAMINE M-2005 (MW = 2000, HLB value = 2.7),
JEFFAMINE M-2070 (MW = 2000, HLB value = 13.8),
JEFFAMINE M-3085 (MW = 3000, HLB value = 16.8),
JEFFAMINE D-230 (MW = 230, HLB value = 3.6),
JEFFAMINE D-400 (MW = 430, HLB value = 1.7),
JEFFAMINE D-2000 (MW = 2000, HLB value = 0.3),
JEFFAMINE D-4000 (MW = 4000, HLB value = 0.2),
JEFFAMINE ED-600 (MW = 600, HLB value = 13.4),
JEFFAMINE ED-900 (MW = 900, HLB value = 12.5), and
JEFFAMINE ED-2003 (MW = 2000, HLB value = 16.7).

These commercial products can be used alone or in a combination of two or more.

In one embodiment, the content of the polyetheramine (B) is generally 6 to 100 parts by mass, preferably 10 to 90 parts by mass, more preferably 15 to 80 parts by mass, even more preferably 20 to 70 parts by mass, still more preferably 25 to 60 parts by mass, and particularly preferably 30 to 50 parts by mass, per 100 parts by mass of the acid-modified polyolefin resin (A), from the viewpoint of maintaining better fluidity of the modified polyolefin resin composition and further improving adhesion to polyolefin substrates (particularly polypropylene substrates) and plastic materials (particularly PET and ABS).

In one embodiment, the content ratio of the polyetheramine (B) to the total mass of the modified polyolefin resin composition is generally 0.5 to 40 mass%, preferably 1 to 35 mass%, more preferably 2 to 30 mass%, even more preferably 3 to 25 mass%, still more preferably 4 to 20 mass%, and particularly preferably 5 to 17.5 mass%, from the viewpoint of maintaining better fluidity of the modified polyolefin resin composition and further improving adhesion to polyolefin substrates (particularly polypropylene substrates) and plastic materials (particularly PET and ABS).

Compound Having Polymerizable Unsaturated Group (C)

The present invention comprises a compound having a polymerizable unsaturated group (C). The compound having a polymerizable unsaturated group (C) generally has one or more (e.g., one, two, three, or four) polymerizable unsaturated groups. In the present specification, the term "polymerizable unsaturated group" refers to an unsaturated group capable of radical polymerization.

In one embodiment, the number of polymerizable unsaturated groups in the compound having a polymerizable unsaturated group (C) is preferably one or two.

In one embodiment, the polymerizable unsaturated group in the compound having a polymerizable unsaturated group (C) is preferably at least one selected from the group consisting of an acryloyl group, a methacryloyl group, an acryloyloxy group, a methacryloyloxy group, a vinyl group, an allyl group, a propenyl group, an isopropenyl group, a maleimide group, and a vinyl ether group.

In one embodiment, the polymerizable unsaturated group in the compound having a polymerizable unsaturated group (C) is more preferably at least one selected from the group consisting of an acryloyl group, a methacryloyl group, an acryloyloxy group, and a methacryloyloxy group.

In one embodiment, the polymerizable unsaturated group in the compound having a polymerizable unsaturated group (C) is more preferably an acryloyloxy group and/or a methacryloyloxy group.

In one embodiment, preferably, the compound having a polymerizable unsaturated group (C) comprises a compound having a hydroxyl group and one or more (e.g., one, two, three, or four) polymerizable unsaturated groups. In this case, the number of hydroxyl groups is preferably one or two, more preferably one.

In one embodiment, more preferably, the compound having a polymerizable unsaturated group (C) comprises a compound having a hydroxyl group and one to three (one, two, or three) polymerizable unsaturated groups. In this case, the number of hydroxyl groups is preferably one or two, and more preferably one.

In one embodiment, preferably, the compound having a polymerizable unsaturated group (C) comprises a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or more (e.g., one, two, three, or four) polymerizable unsaturated groups, from the viewpoint of maintaining better fluidity of the modified polyolefin resin composition. In this case, the number of polymerizable unsaturated groups is preferably one or two, and more preferably two.

In one embodiment, preferably, the compound having a polymerizable unsaturated group (C) comprises a compound having a linear or branched alkyl group having 1 to 20 (1, 2, 3, 4, 5, 6, 7, 8, 9, 10, 11, 12, 13, 14, 15, 16, 17, 18, 19, or 20) carbon atoms and one or more (e.g., one, two, three, or four) polymerizable unsaturated groups. In this case, the number of polymerizable unsaturated groups is preferably one or two, and more preferably one.

In one embodiment, preferably, the compound having a polymerizable unsaturated group (C) comprises:

a compound having a hydroxyl group and one or more (e.g., one, two, three, or four) polymerizable unsaturated groups; and
a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or more (e.g., one, two, three, or four) polymerizable unsaturated groups.

In one embodiment, more preferably, the compound having a polymerizable unsaturated group (C) comprises:

a compound having a hydroxyl group and one or two polymerizable unsaturated groups; and
a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or two polymerizable unsaturated groups.

In one embodiment, the alkyleneoxy group generally has a structure represented by the following formula 5:

$$-(Y^1-O)m-  \qquad \text{Formula 5}$$

wherein $Y^1$ represents a linear or branched alkylene group having 1 to 10 (1, 2, 3, 4, 5, 6, 7, 8, 9, or 10) carbon atoms, and m represents an integer from 1 to 20.

In formula 5, $Y^1$ is preferably a linear or branched alkylene group having 1 to 5 (1, 2, 3, 4, or 5) carbon atoms.

In formula 5, m is preferably an integer from 2 to 15.

In one embodiment, preferably, the compound having a polymerizable unsaturated group (C) comprises a compound represented by the following formula 6:

$$R^a-R^b-R^c  \qquad \text{Formula 6}$$

wherein $R^a$ represents a polymerizable unsaturated group, $R^c$ represents a polymerizable unsaturated group or a methyl group, $R^b$ represents a group represented by $-(Y^2-O)n-$ or a linear or branched alkylene group having 1 to 20 (1, 2, 3, 4, 5, 6, 7, 8, 9, 10, 11, 12, 13, 14, 15, 16, 17, 18, 19, or 20) carbon atoms, $Y^2$ represents a linear or branched alkylene group having 1 to 10 (1, 2, 3, 4, 5, 6, 7, 8, 9, or 10) carbon atoms, and n represents an integer from 1 to 20.

In formula 6, $Y^2$ is preferably a linear or branched alkylene group having 1 to 5 (1, 2, 3, 4, or 5) carbon atoms.

In formula 6, n is preferably an integer from 2 to 15.

In one embodiment, more preferably, the compound having a polymerizable unsaturated group (C) comprises one or more compounds represented by formula 6.

In one embodiment, preferably, the compound having a polymerizable unsaturated group (C) comprises a compound having a (meth)acryloyloxy group as the polymerizable unsaturated group. Examples of the compound having a (meth)acryloyloxy group include a compound having one (meth)acryloyloxy group, a compound having two (meth)acryloyloxy groups, a compound having three or more (meth)acryloyloxy groups, and the like. These compounds can be used alone or in a combination of two or more.

Examples of the compound having one (meth)acryloyloxy group include:

alkyl (meth)acrylates, such as 2-hydroxyethyl (meth)acrylate, 2-hydroxypropyl (meth)acrylate, 3-hydroxypropyl (meth)acrylate, 4-hydroxybutyl (meth)acrylate, 1,4-cyclohexanedimethanol monoacrylate, polyethylene glycol mono(meth)acrylate, polypropylene glycol mono(meth)acrylate, polybutylene glycol mono(meth)acrylate, polyethylene glycol-polypropylene glycol mono(meth)acrylate, 2-hydroxy-3-phenoxypropyl (meth)acrylate, phenoxydiethylene glycol (meth)acrylate, methyl(meth)acrylate, ethyl (meth)acrylate, n-propyl (meth)acrylate, i-propyl (meth) acrylate, n-butyl (meth)acrylate, i-butyl (meth)acrylate, t-butyl (meth)acrylate, n-hexyl (meth)acrylate, n-octyl (meth)acrylate, 2-ethylhexyl (meth)acrylate, dodecyl (meth)acrylate, stearyl (meth)acrylate, and behenyl (meth) acrylate;
(meth)acrylates having an alicyclic structure, such as cyclohexyl (meth)acrylate and isobornyl (meth)acrylate;
(meth)acrylates having an aromatic ring, such as benzyl (meth)acrylate, phenoxyethyl acrylate, and phenoxyethyl methacrylate;
(meth)acrylates having an amino group, such as dimethylaminoethyl (meth)acrylate, diethylaminoethyl (meth) acrylate, t-butylaminoethyl (meth)acrylate, methylethylaminoethyl (meth)acrylate, dimethylaminostyrene, diethylaminostyrene, pentamethylpiperidinyl (meth)acrylate, and tetramethylpiperidinyl (meth)acrylate;
(meth)acrylates having an epoxy group, such as glycidyl (meth)acrylate, and 3,4-epoxycyclohexyl (meth)acrylate; and (meth)acrylates having an ether group, such as methoxymethyl (meth)acrylate, ethoxymethyl (meth)acrylate, propoxymethyl (meth)acrylate, 2-methoxyethyl (meth)acrylate, 1-methoxyethyl (meth)acrylate, 2-ethoxyethyl (meth) acrylate, 1-ethoxyethyl (meth)acrylate, 2-propoxyethyl (meth)acrylate, and 2-isopropoxyethyl (meth)acrylate. These compounds can be used alone or in a combination of two or more.

Examples of the compound having two (meth)acryloyloxy groups include:

alkanediol di(meth)acrylates, such as 1,4-butanediol di(meth)acrylate, neopentyl glycol di(meth)acrylate, 1,6-hexanediol di(meth)acrylate, 1,9-nonanediol di(meth)acrylate, and tricyclodecane dimethylol di(meth)acrylate;
bisphenol-modified di(meth)acrylates, such as bisphenol A ethylene oxide-modified di(meth)acrylate and bisphenol F ethylene oxide-modified di(meth)acrylate; and ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, urethane di(meth)acrylate, epoxy di(meth)acrylate, glycerol di(meth)acrylate, and the like. These compounds can be used alone or in a combination of two or more.

Examples of the compound having three or more (meth)acryloyloxy groups include:

dipentaerythritol hexa(meth)acrylate, pentaerythritol tetra(meth)acrylate, ditrimethylolpropane tetra(meth)acrylate, pentaerythritol tri(meth)acrylate, trimethylolpropane tri(meth)acrylate;
ethylene oxide-modified (meth)acrylates, such as ethylene oxide-modified dipentaerythritol hexa(meth)acrylate and ethylene oxide-modified pentaerythritol tetra(meth)acrylate;
isocyanuric acid-modified tri(meth)acrylates, such as isocyanuric acid ethylene oxide-modified tri(meth)acrylate and ε-caprolactone-modified tris(acryloyloxyethyl)isocyanurate; and urethane methacrylates, such as pentaerythritol tri(meth)acrylate hexamethylene diisocyanate urethane prepolymer, pentaerythritol tri(meth)acrylate toluene diisocyanate urethane prepolymer, and dipentaerythritol penta(meth)acrylate hexamethylene diisocyanate urethane prepolymer. These compounds can be used alone or in a combination of two or more.

In one embodiment, more preferably, the compound having a polymerizable unsaturated group (C) comprises a compound having two (meth)acryloyloxy groups, from the viewpoint of stably dissolving and/or dispersing the acid-modified polyolefin resin (A) in the compound having a polymerizable unsaturated group (C) and suppressing agglomeration.

Preferably, the compound having two (meth)acryloyloxy groups is at least one selected from the group consisting of neopentyl glycol di(meth)acrylate, 1,6-hexanediol di(meth)acrylate, 1,9-nonanediol di(meth)acrylate, tricyclodecane dimethylol di(meth)acrylate, dipropylene glycol di(meth)acrylate, tripropylene glycol di(meth)acrylate, tetrapropylene glycol di(meth)acrylate, and polypropylene glycol di(meth)acrylate.

In addition to the above, specific examples of the compound having a polymerizable unsaturated group (C) also include compounds having an amide group such as (meth)acrylamide, N-methoxymethyl-(meth)acrylamide, N-ethoxymethyl-(meth)acrylamide, N-propoxymethyl-(meth)acrylamide, N-butoxymethyl-(meth)acrylamide, N-pentoxymethyl-(meth)acrylamide, N,N-di(methoxymethyl)acrylamide, N-ethoxymethyl-N-methoxymethyl methacrylamide, N,N-di(ethoxymethyl)acrylamide, N-ethoxymethyl-N-propoxymethyl methacrylamide, N,N-di(propoxymethyl)acrylamide, N-butoxymethyl-N-(propoxymethyl) methacrylamide, N,N-di(butoxymethyl)acrylamide, N-butoxymethyl-N-(methoxymethyl) methacrylamide, N,N-di(pentoxymethyl)acrylamide, N-methoxymethyl-N-(pentoxymethyl) methacrylamide, N,N-dimethylaminopropyl acrylamide, N,N-diethylaminopropyl acrylamide, N,N-dimethylacrylamide, N,N-diethylacrylamide, and diacetone (meth)acrylamide; aromatic vinyl compounds, such as styrene, α-methylstyrene, o-methylstyrene, p-methylstyrene, m-methylstyrene, vinylnaphthalene, and indene; and (meth)acrylonitrile, acryloylmorpholine, and the like.

In one embodiment, the content ratio of the compound having a polymerizable unsaturated group (C) to the total mass of the modified polyolefin resin composition is preferably 10 to 95 mass%, more preferably 20 to 90 mass%, even more preferably 30 to 85 mass%, and particularly preferably 40 to 80 mass%, from the viewpoint of maintaining better fluidity of the modified polyolefin resin composition and further improving adhesion to polyolefin substrates (particularly polypropylene substrates) and plastic materials (particularly PET and ABS).

In one embodiment, preferably, the compound having a polymerizable unsaturated group (C) comprises a compound having a hydroxyl group and one or more (e.g., one, two, three, or four) polymerizable unsaturated groups, from the viewpoint of maintaining better fluidity of the modified polyolefin resin composition and further improving adhesion to polyolefin substrates (particularly polypropylene substrates) and plastic materials (particularly PET and ABS). In this case, the content ratio of the compound having a hydroxyl group and one or more (e.g., one, two, three, or four) polymerizable unsaturated groups to the total mass of the modified polyolefin resin composition is preferably 1 to 50 mass%, more preferably 3 to 45 mass%, even more preferably 6 to 40 mass%, and still more preferably 10 to 35 mass%, from the viewpoint of maintaining better fluidity of the modified polyolefin resin composition and further improving adhesion to polyolefin substrates (particularly polypropylene substrates) and plastic materials (particularly PET and ABS).

Specific examples of the compound having a hydroxyl group and one or more (e.g., one, two, three, or four) polymerizable unsaturated groups include 2-hydroxy-1,3-dimethacryloxypropane, 2-hydroxy-3-methacrylpropyl acrylate, glycerol diacrylate, pentaerythritol di(meth)acrylate, pentaerythritol tri(meth)acrylate, and the like.

In one embodiment, the compound having a polymerizable unsaturated group (C) may contain a biomass-derived (meth)acrylic monomer component. The term "biomass-derived (meth)acrylic monomer component" refers to a component composed of biomass-derived (meth)acrylic acid and an ester of a biomass-derived alkanol with either biomass-derived or non-biomass-derived (meth)acrylic acid. Examples of biomass-derived alkanols include alkanols derived from plant-based materials such as biomass ethanol, palm oil, palm kernel oil, and coconut oil. In the case of a biomass-derived alkanol having three or more carbon atoms, the alkanol may be linear or branched.

In one embodiment, the weight average molecular weight (Mw) of the compound having a polymerizable unsaturated group (C) is preferably 5000 or less, more preferably 2000 or less, and even more preferably 1000 or less, from the viewpoint of maintaining better fluidity of the modified polyolefin resin composition and further improving the workability thereof.

In one embodiment, the weight average molecular weight (Mw) of the compound having a polymerizable unsaturated group (C) is preferably 100 or more, more preferably 120 or more, even more preferably 140 or more, from the viewpoint of maintaining better fluidity of the modified polyolefin resin composition and further improving the workability thereof.

In one embodiment, the weight average molecular weight (Mw) of the compound having a polymerizable unsaturated group (C) is preferably 100 or more and 5000 or less, more preferably 120 or more and 2000 or less, and still more preferably 140 or more and 1000 or less, from the viewpoint of maintaining better fluidity of the modified polyolefin resin composition and further improving the workability thereof.

In one embodiment, the modified polyolefin resin composition may contain a coating film-forming resin other than the compound having a polymerizable unsaturated group (C). Examples of the coating film-forming resin include acrylic resin, polyester resin, alkyd resin, polyether resin, polyolefin resin, polyurethane resin, polycarbonate resin, melamine resin, epoxy resin, carbodiimide resin, and the like. These resins can be used alone or in a combination of two or more. The content of the coating film-forming resin is preferably 10 to 30 parts by mass per 100 parts by mass of the modified polyolefin resin composition.

Ionic Liquid (D)

In one embodiment, the ionic liquid (D) is composed of a cation and an anion. In the present specification, the ionic liquid (D) generally means a salt that becomes a liquid at 100°C or lower. In the present specification, the ionic liquid (D) preferably means a salt that becomes a liquid at 25°C.

In one embodiment, the ionic liquid (D) for use may be one in which a cation and an anion are suitably combined.

Examples of the cation constituting the ionic liquid (D) include a cation having a positively charged nitrogen atom, a cation having a positively charged phosphorus atom, a cation having a positively charged sulfur atom, a cation having positively charged nitrogen atom and sulfur atom, a cation having a positively charged metal element, and the like. The cation constituting the ionic liquid (D) is preferably a cation having a positively charged nitrogen atom, a cation having a positively charged phosphorus atom, or a cation having a positively charged sulfur atom, and more preferably a cation having a positively charged nitrogen atom.

Examples of cations having a positively charged nitrogen atom include imidazolium cations, ammonium cations, pyridinium cations, quinolinium cations, pyrrolidinium cations, piperidinium cations, piperazinium cations, morpholinium cations, pyridazinium cations, pyrimidinium cations, pyrazinium cations, pyrazolium cations, thiazolium cations, oxazolium cations, triazolium cations, guanidium cations, 4-aza-1-azoniabicyclo[2,2,2]octanium cations, and the like. These cations may have one or more substituents at any position. Examples of substituents include alkyl groups and the like.

Specific examples of imidazolium cations include 1,2,3-trialkylimidazolium cations, such as 1-methylimidazolium cation, 1-ethylimidazolium cation, 1-propylimidazolium cation, 1-butylimidazolium cation, 1-butyl-3-methylimidazolium cation, 1-ethyl-3-methylimidazolium cation, 1-allyl-3-methylimidazolium cation, 1,3-diallyl imidazolium cation, 1-benzyl-3-methylimidazolium cation, 1-methyl-3-octylimidazolium cation, 1-ethyl-2,3-dimethylimidazolium cation, 1-butyl-2,3-dimethylimidazolium cation, and 1,2-dimethyl-3-propylimidazolium cation; and 1-cyanopropyl-3-methylimidazolium cation, 1,3-biscyanomethylimidazolium cation, 1,3-bis(3-cyanopropyl)imidazolium cation, 1-(2-hydroxyethyl)-3-methylimidazolium cation, 1-methoxyethyl-3-methylimidazolium cation, 1-[2-(2-methoxyethoxy)-ethyl]-3-methylimidazolium cation, 1,3-diethoxyimidazolium cation, 1,3-dimethoxyimidazolium cation, 1,3-dihydroxyimidazolium cation, 1-methyl-3-(3,3,4,4,5,5,6,6,7,7,8,8,8-tridecafluorooctylimidazolium cation, 1-methyl-3-[(triethoxysilyl)propyl]imidazolium cation, and the like.

Specific examples of ammonium cations include dialkylammonium cations, such as dioctylammonium cation and bis(2-ethylhexyl)ammonium cation; trialkylammonium cations, such as trioctylammonium cation, dimethylmyristylammonium cation, dimethylpalmitylammonium cation, dimethylstearylammonium cation, dimethylbehenylammonium cation, and dilaurylmethylammonium cation; tetraalkylammonium cations, such as methyltrioctylammonium cation, trihexyltetradecylammonium cation, (2-hydroxyethyl)trimethylammonium cation, (2-acryloyloxyethyl)trimethylammonium cation, (2-methacryloyloxyethyl)trimethylammonium cation, N,N-diethyl-N-(2-methoxyethyl)-N-methylammonium cation, tris(2-hydroxyethyl)methylammonium cation, trimethyl(1H,1H,2H,2H-heptadecafluorodecyl) ammonium cation, and 2-(methacryloyloxy)ethyltrimethylammonium cation; diarylammonium cations, such as dibenzylammonium cation; triarylammonium cations, such as tribenzylammonium cation; and the like. Among these, the ammonium cation is preferably a tetraalkylammonium.

Specific examples of pyridinium cations include 1-ethylpyridinium cation, 1-butylpyridinium cation, 1-(3-hydroxypropyl)pyridinium cation, 1-ethyl-3-methylpyridinium cation, 1-butyl-3-methylpyridinium cation, 1-butyl-4-methylpyridinium cation, 1-(3-cyanopropyl)pyridinium cation, and the like.

Specific examples of pyrrolidinium cations include 1-methyl-1-propylpyrrolidinium cation, 1-butyl-1-methylpyrrolidinium cation, 1-(2-hydroxyethyl)-1-methylpyrrolidinium cation, 1-ethyl-1-methylpyrrolidinium cation, and the like.

Specific examples of piperidinium cations include 1-methyl-1-propylpiperidinium cation, 1-butyl-1-methylpiperidinium cation, 1-(2-hydroxyethyl)-1-methylpiperidinium cation, 1-ethyl-1-methylpiperidinium cation, and the like.

Cations having a positively charged phosphorus atom are generally referred to as "phosphonium cations." Specific examples of cations having a positively charged phosphorus atom include tetrabutylphosphonium cation, tetrahexylphosphonium cation, trihexyltetradecylphosphonium cation, triphenylmethylphosphonium cation, (2-cyanoethyl)triethylphosphonium cation, (3-chloropropyl)trioctylphosphonium cation, tributyl(4-vinylbenzyl)phosphonium cation, triisobutylmethylphosphonium cation, triethylmethylphosphonium cation, tributylmethylphosphonium cation, tributylhexadecylphosphonium cation, 3-(triphenylphosphonio)propane-1-sulfonic acid cation, and the like.

Cations having a positively charged sulfur atom are generally referred to as "sulfonium cations." Specific examples of cations having a positively charged sulfur atom include triethylsulfonium cation, tributylsulfonium cation, 1-ethyltetrahydrothiophenium cation, 1-butyltetrahydrothiophenium cation, and the like.

In one embodiment, the cation constituting the ionic liquid (D) is preferably at least one cation selected from the group consisting of tetraalkylammonium cations, imidazolium cations, pyridinium cations, pyrazolium cations, pyrrolium cations, pyrrolinium cations, pyrrolidinium cations, and piperidinium cations, and more preferably a tetraalkylammonium cation, from the viewpoint of maintaining better fluidity, further improving adhesion to polyolefin substrates (particularly polypropylene substrates) and plastic materials (particularly PET and ABS), and further improving antistatic performance.

In one embodiment, the cation constituting the ionic liquid (D) is preferably a cation having a polymerizable unsaturated group, from the viewpoint of maintaining better fluidity, further improving adhesion to polyolefin substrates (particularly polypropylene substrates) and plastic materials (particularly PET and ABS), and further improving antistatic performance.

Specific examples of cations having a polymerizable unsaturated group include (2-acryloyloxyethyl)trimethylammonium cation and (2-methacryloyloxyethyl)trimethylammonium cation, and the like.

In one embodiment, the cation constituting the ionic liquid (D) is preferably a tetraalkylammonium cation or a tetraalkylammonium cation having one or two polymerizable unsaturated groups, and more preferably a tetraalkylammonium cation or a tetraalkylammonium cation having one polymerizable unsaturated group.

In one embodiment, the polymerizable unsaturated group of the cation constituting the ionic liquid (D) is preferably an acryloyl group, a methacryloyl group, an acryloyloxy group, or a methacryloyloxy group, more preferably an acryloyloxy group or a methacryloyloxy group, and even more preferably an acryloyloxy group. The number of polymerizable unsaturated groups contained in the cation is preferably 1 or 2, and more preferably 1.

In one embodiment, the anion constituting the ionic liquid (D) is preferably a sulfonate anion, a carboxylate anion, a phosphate anion, a sulfonamide anion, or a sulfonimide anion, and more preferably a sulfonimide anion.

Specific examples of sulfonimide anions include bis(fluorosulfonyl)imide anion, bis(trifluoromethanesulfonyl) imide anion, bis(pentafluoroethanesulfonyl)imide anion, bis(heptafluoropropanesulfonyl)imide anion, bis(nonafluorobutanesulfonyl)imide anion, [(trifluoromethanesulfonyl) (pentafluoroethanesulfonyl)]imide anion, and the like.

Specific examples of the anion constituting the ionic liquid (D) include a fluoride anion, chloride anion, bromide anion, iodide anion, dicyanamide anion, bis(fluorosulfonyl)imide anion, bis(trifluoromethylsulfonyl)imide anion, 2,2,2-trifluoro-N-(trifluoromethylsulfonyl)acetamide anion, bis(pentafluoroethylsulfonyl)imide anion, bis(nonafluorobutylsulfonyl)imide anion, tetrafluoroborate anion, tetrakis[3,5-bis(trifluoromethyl)phenyl]borate anion, methanesulfonate anion, butylsulfonate anion, trifluoromethanesulfonate anion, tetrafluoroethanesulfonate anion, nonafluorobutanesulfonate anion, benzenesulfonate anion, p-toluenesulfonate anion, 2,4,6-trimethylbenzenesulfonate anion, styrenesulfonate anion, perfluorooctanesulfonate anion, heptadecafluorooctanesulfonate anion, 3-sulfopropyl methacrylate anion, 3-sulfopropyl acrylate anion, methylsulfate anion, ethylsulfate anion, octylsulfate anion, diethylene glycol monomethyl ether sulfate, hydrogen sulfate anion, hexafluorophosphate anion, tris(pentafluoroethyl)trifluorophosphate anion, dihydrogen phosphate anion, dibutylphosphate anion, diethylphosphate anion, dimethylphosphate anion, bis(2,4,4-trimethylpentyl)phosphinate anion, methylphosphonate anion, methylmethylphosphonate anion, formate anion, acetate anion, propionate anion, butyrate anion, trifluoroacetate anion, hydroxyacetate anion, perfluorononanoate anion, decanoate anion, mandelate anion, thiosalicylate anion, benzoate anion, salicylate anion, p-methylbenzoate anion, p-nitrobenzoate anion, fluorohydrogenate anion, lactate anion, glycinate anion, alaninate anion, leucinate anion, valinate anion, trifluoromethanesulfonyl leucinate anion, trifluoromethanesulfonyl valinate anion, nitrate anion, perchlorate anion, phenoxide anion, thiocyanate anion, tris(trifluoromethanesulfonyl)methide anion, acesulfamate anion, saccharinate anion, pyrazolate anion, imidazolate anion, thiazolate anion, triazolate anion, tetrazolate anion, indazolate anion, benzothiazolate anion, hexafluoroastatinate anion, hexafluoroantimonate anion, thiocyanate anion, tetrachloroaluminate anion, tetrachloroferrate anion, carbonate anion, methylcarbonate anion, carbamate anion, and the like.

Specific examples of the ionic liquid (D) include tetrahexylammonium bis(trifluoromethanesulfonyl)imide, N,N-dimethyl-N-ethyl-N-propylammonium bis(trifluoromethanesulfonyl)imide, N,N-dimethyl-N-ethyl-N-butylammonium bis(trifluoromethanesulfonyl)imide, N,N-dimethyl-N-ethyl-N-pentylammonium bis(trifluoromethanesulfonyl)imide, N,N-dimethyl-N-ethyl-N-hexylammonium bis(trifluoromethanesulfonyl)imide, N,N-dimethyl-N-ethyl-N-heptylammonium bis(trifluoromethanesulfonyl)imide, N,N-dimethyl-N-ethyl-N-nonylammonium bis(trifluoromethanesulfonyl)imide, N,N-dimethyl-N,N-dipropylammonium bis(trifluoromethanesulfonyl)imide, N,N-dimethyl-N-propyl-N-butylammonium bis(trifluoromethanesulfonyl)imide, N,N-dimethyl-N-propyl-N-pentylammonium bis(trifluoromethanesulfonyl)imide, N,N-dimethyl-N-propyl-N-hexylammonium bis(trifluoromethanesulfonyl)imide, N,N-dimethyl-N-propyl-N-heptylammonium bis(trifluoromethanesulfonyl)imide, N,N-dimethyl-N-butyl-N-hexylammonium bis(trifluoromethanesulfonyl)imide, N,N-dimethyl-N-butyl-N-heptylammonium bis(trifluoromethanesulfonyl)imide, N,N-dimethyl-N-pentyl-N-hexylammonium bis(trifluoromethanesulfonyl)imide, N,N-dimethyl-N,N-dihexylammonium bis(trifluoromethanesulfonyl)imide, trimethylheptylammonium bis(trifluoromethanesulfonyl)imide, N,N-diethyl-N-methyl-N-propylammonium bis(trifluoromethanesulfonyl)imide, N,N-diethyl-N-methyl-N-pentylammonium bis(trifluoromethanesulfonyl)imide, N,N-diethyl-N-methyl-N-heptylammonium bis(trifluoromethanesulfonyl)imide, N,N-diethyl-N-propyl-N-pentylammonium bis(trifluoromethanesulfonyl)imide, N,N-dipropyl-N-methyl-N-ethylammonium bis(trifluoromethanesulfonyl)imide, N,N-dipropyl-N-methyl-N-pentylammonium bis(trifluoromethanesulfonyl)imide, N,N-dipropyl-N-butyl-N-hexylammonium bis(trifluoromethanesulfonyl)imide, triethylpropylammonium bis(trifluoromethanesulfonyl)imide, triethylpentylammonium bis(trifluoromethanesulfonyl)imide, triethylheptylammonium bis(trifluoromethanesulfonyl)imide, N,N-dipropyl-N,N-dihexylammonium bis(trifluoromethanesulfonyl)imide, N,N-dibutyl-N-methyl-N-pentylammonium bis(trifluoromethanesulfonyl)imide, N,N-dibutyl-N-methyl-N-hexylammonium bis(trifluoromethanesulfonyl)imide, trioctylmethylammonium bis(trifluoromethanesulfonyl)imide, N-methyl-N-ethyl-N-propyl-N-pentylammonium bis(trifluoromethanesulfonyl)imide, (2-acryloyloxyethyl)trimethylammonium bis(trifluoromethanesulfonyl)imide, methyltrioctylammonium bis(trifluoromethanesulfonyl)imide, trioctylammonium salicylate, dioctylammonium benzoate, dioctylammonium 4-methylbenzoate, dioctylammonium 4-nitrobenzoate, dioctylammonium salicylate, bis(2-ethylhexyl)ammonium benzoate, bis(2-ethylhexyl)ammonium 4-methylbenzoate, bis(2-ethylhexyl)ammonium 4-nitrobenzoate, bis(2-ethylhexyl)ammonium salicylate, trioctylammonium benzoate, trioctylammonium 4-methylbenzoate, trioctylammonium 4-nitrobenzoate, dimethylmyristylammonium benzoate, dimethylmyristylammonium 4-methylbenzoate, dimethylmyristylammonium 4-nitrobenzoate, dimethylmyristyl salicylate, dimethylpalmityl ammonium benzoate, dimethylpalmitylammonium 4-methylbenzoate, dimethylpalmitylammonium 4-nitrobenzoate, dimethylpalmityl salicylate, dimethylstearylammonium benzoate, dimethylstearylammonium 4-methylbenzoate, dimethylstearylammonium 4-nitrobenzoate, dimethylstearyl salicylate, dimethylbehenyl ammonium benzoate, dimethylbehenylammonium 4-methylbenzoate, dimethylbehenylammonium 4-nitrobenzoate, dimethylbehenyl salicylate, dilaurylmethylammonium benzoate, dilaurylmethylammonium 4-methylbenzoate, dilaurylmethylammonium ammonium 4-nitrobenzoate, dilaurylmethylammonium salicylate, dibenzyl ammonium benzoate, dibenzylammonium 4-methylbenzoate, dibenzylammonium 4-nitrobenzoate, dibenzylammonium salicylate, tribenzylammonium benzoate, tribenzylammonium 4-methylbenzoate, tribenzylammonium 4-nitrobenzoate, tribenzylammonium salicylate, and the like.

The ionic liquid (D) is particularly preferably (2-acryloyloxyethyl)trimethylammonium bis(trifluoromethanesulfonyl)imide or methyltrioctylammonium bis(trifluoromethanesulfonyl)imide.

In one embodiment, the content of the ionic liquid (D) is preferably 0.1 to 20 parts by mass, more preferably 0.5 to 15 parts by mass, and even more preferably 0.8 to 12.5 parts by mass, per 100 parts by mass of the modified polyolefin resin composition. When the content of the ionic liquid (D) is within the above ranges, the antistatic performance is further improved, adhesion to polyolefin substrates (particularly polypropylene substrates) and plastic materials (particularly PET and ABS) is further improved, and the fluidity of the modified polyolefin resin composition tends to be further improved.

A preferred aspect of the modified polyolefin resin composition (hereinafter described as "aspect A") may be as follows:

a modified polyolefin resin composition comprising an acid-modified polyolefin resin (A), a polyetheramine (B), two "compounds having a polymerizable unsaturated group (C)," and an ionic liquid (D),

wherein the two compounds having a polymerizable unsaturated group (C) comprise: a compound having an alkyleneoxy group or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or two polymerizable unsaturated groups; and a compound having a hydroxyl group and one or two polymerizable unsaturated groups.

In aspect A, the alkyleneoxy group is preferably an alkyleneoxy group represented by formula 5 above. In this case, $Y^1$ in formula 5 is preferably a linear or branched alkylene group having 1 to 5 (1, 2, 3, 4 or 5) carbon atoms, and m is preferably an integer from 2 to 15.

In aspect A, the linear or branched alkyl group preferably has 1 to 10 (1, 2, 3, 4, 5, 6, 7, 8, 9, or 10) carbon atoms.

In aspect A, the polymerizable unsaturated group is preferably at least one selected from the group consisting of an acryloyl group, a methacryloyl group, an acryloyloxy group, and a methacryloyloxy group, and more preferably an acryloyloxy group and/or a methacryloyloxy group.

In aspect A, the number of hydroxyl groups is preferably one or two.

Another preferred embodiment of the modified polyolefin resin composition (hereinafter referred to as "aspect B") may be as follows:

a modified polyolefin resin composition comprising an acid-modified polyolefin resin (A), a polyetheramine (B), a compound having a polymerizable unsaturated group (C), and an ionic liquid (D),

wherein the compound having a polymerizable unsaturated group (C) is at least one compound selected from the group consisting of neopentyl glycol diacrylate, 1,9-nonanediol diacrylate, tripropylene glycol diacrylate, polypropylene glycol diacrylate, 2-ethylhexyl acrylate, 4-hydroxybutyl acrylate, and 2-hydroxy-3-methacrylpropyl acrylate.

Polymerization Initiator

In one embodiment, the modified polyolefin resin composition may contain a polymerization initiator as long as the effects of the present invention are not impaired. Due to the presence of a polymerization initiator, the polymerization reaction of the polymerizable unsaturated group in the compound (C) can proceed more smoothly, and a resin for forming a coating film can be more easily formed. In addition, the use of a polymerization initiator can further improve the corrosion resistance and durability of the coating film.

The amount of polymerization initiator used is preferably 0.1 to 20 parts by mass, more preferably 1 to 10 parts by mass, and even more preferably 2 to 5 parts by mass, per 100 parts by mass of the modified polyolefin resin composition, from the viewpoint of increasing the curing speed of the coating film obtained from the modified polyolefin resin composition.

Usable polymerization initiators are polymerization initiators that can initiate the polymerization reaction of the polymerizable unsaturated group. Examples include photopolymerization initiators that generate radicals by light, thermal polymerization initiators that generate radicals by heat, and the like. These polymerization initiators can be used alone or in a combination of two or more.

Photopolymerization initiators are compounds that generate radicals or acids when irradiated with ultraviolet or visible light and initiate a chain polymerization reaction. Examples of photopolymerization initiators include acetophenone-based photopolymerization initiators, benzoin-based photopolymerization initiators, benzophenone-based photopolymerization initiators, thioxanthone-based photopolymerization initiators, acylphosphine oxide-based photopolymerization initiators, titanocene-based photopolymerization initiators, and the like. These photopolymerization initiators can be used alone or in a combination of two or more.

Specific examples of acetophenone-based photopolymerization initiators include diethoxyacetophenone, 2-hydroxy-2-methyl-1-phenyl-propan-1-one, benzyldimethylketal, 4-(2-hydroxyethoxy)phenyl-(2-hydroxy-2-propyl)ketone, 1-hydroxycyclohexylphenylketone, 2-methyl-2-morpholino(4-thiomethylphenyl)propan-1-one, 2-benzyl-2-dimethylamino-1-(4-morpholinophenyl)butanone, 2-hydroxy-2-methyl-1-[4-(1-methylvinyl)phenyl]propanone oligomer, and the like. These can be used alone or in a combination of two or more.

Specific examples of benzoin-based photopolymerization initiators include benzoin methyl ether, benzoin ethyl ether, benzoin propyl ether, benzoin isopropyl ether, benzoin isobutyl ether, and the like. These can be used alone or in a combination of two or more.

Specific examples of benzophenone-based photopolymerization initiators include benzophenone, benzoylbenzoic acid, polyvinylbenzophenone, $\alpha$-hydroxycyclohexyl phenyl ketone, and the like. These can be used alone or in a combination of two or more.

Specific examples of thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, isopropylthioxanthone, 2,4-diisopropylthioxanthone, dodecylthioxanthone, and the like. These can be used alone or in a combination of two or more.

Specific examples of acylphosphine oxide-based photopolymerization initiators include bis(2,4,6-trimethylbenzoyl)-phenyl-phosphine oxide, ethoxyphenyl(2,4,6-trimethylbenzoyl)phosphine oxide, and the like. These can be used alone or in a combination of two or more.

Specific examples of titanocene-based photopolymerization initiators include:

bis(cyclopentadienyl)-bis[2,6-difluoro-3-(2-(1-pyr-1-yl)ethyl)phenyl]titanium,
bis(cyclopentadienyl)-bis[2,6-difluoro-3-(3-(1-pyr-1-yl)propyl)phenyl]titanium,
bis(cyclopentadienyl)-bis[2,6-difluoro-3-((1-pyr-1-yl)methyl)phenyl]titanium,
bis(methylcyclopentadienyl)-bis[2,6-difluoro-3-((1-pyr-1-yl)methyl)phenyl]titanium,
bis(cyclopentadienyl)-bis[2,6-difluoro-3-((2,5-dimethyl-1-pyr-1-yl)methyl)phenyl]titanium,
bis(cyclopentadienyl)-bis[2,6-difluoro-3-((2-isopropyl-5-methyl-1-pyr-1,6-yl)methyl)phenyl]titanium,
bis(cyclopentadienyl)-bis[2,6-difluoro-3-((2-(2-methoxyethyl)-5-methyl-1-pyr-1-yl)methyl)phenyl]titanium, and the like. These can be used alone or in a combination of two or more.

Thermal polymerization initiators are compounds that generate radicals by heating and initiate a chain polymerization reaction. Examples of thermal polymerization initiators include organic peroxides; inorganic peroxides, such as potassium persulfate, ammonium persulfate, and hydrogen peroxide; and the like. Specific examples of organic peroxides include:

ketone peroxide compounds, such as methyl ethyl ketone peroxide, cyclohexanone peroxide, 3,3,5-trimethylcyclohexanone peroxide, methylcyclohexanone peroxide, methyl acetoacetate peroxide, and acetylacetone peroxide;
peroxyketal compounds, such as 1,1-bis(t-butylperoxy)-3,3,5-trimethylcyclohexane, 1,1-bis(t-butylperoxy)cyclohexane, 2,2-bis(t-butylperoxy)octane, n-butyl-4,4-bis(t-butylperoxy)valerate, and 2,2-bis(t-butylperoxy)butane;
hydroperoxide compounds, such as t-butyl hydroperoxide, cumene hydroperoxide, diisopropylbenzene hydroperoxide, p-menthane hydroperoxide, 2,5-dimethylhexane-2,5-dihydroperoxide, and 1,1,3,3-tetramethylbutyl hydroperoxide;
dialkyl peroxide compounds, such as t-butyl peroxide, t-butylcumyl peroxide, dicumyl peroxide, $\alpha,\alpha$'-bis(t-butylperoxy-m-isopropyl)benzene, 2,5-dimethyl-2,5-di(t-butylperoxy)hexane, and 2,5-dimethyl-2,5-di(t-butylperoxy)hexyne-3;
diacyl peroxide compounds, such as acetyl peroxide, isobutyryl peroxide, octanoyl peroxide, decanoyl peroxide, lauroyl peroxide, 3,5,5-trimethylhexanoyl peroxide, succinic acid peroxide, benzoyl peroxide, 2,4-dichlorobenzoyl peroxide, and m-toluoyl peroxide;
peroxydicarbonate compounds, such as diisopropyl peroxydicarbonate, di-2-ethylhexyl peroxydicarbonate, di-n-propyl peroxydicarbonate, bis-(4-t-butylcyclohexyl)peroxydicarbonate, dimyristyl peroxydicarbonate, di-2-ethoxyethyl peroxydicarbonate, dimethoxyisopropylperoxydicarbonate, di(3-methyl-3-methoxybutyl)peroxydicarbonate, and diallyl peroxydicarbonate;
peroxyester compounds, such as t-butyl peroxyacetate, t-butyl peroxyisobutyrate, t-butyl peroxypivalate, t-butyl peroxyneodecanoate, cumyl peroxyneodecanoate, t-butyl peroxy-2-ethylhexanoate, t-butyl peroxy-3,5,5-trimethylhexanoate, t-butyl peroxylaurate, t-butyl peroxybenzoate, di-t-butyl peroxyisophthalate, 2,5-dimethyl-2,5-di(benzoylperoxy)hexane, t-butyl peroxymaleic acid, t-butyl peroxyisopropylcarbonate, cumyl peroxyoctoate, t-hexyl peroxyneodecanoate, t-hexyl peroxypivalate, t-butyl peroxyneohexanoate, t-hexyl peroxyneohexanoate, and cumyl peroxyneohexanoate; acetyl cyclohexylsulfonyl peroxide, t-butyl peroxyallyl carbonate, and the like. These organic peroxides can be used alone or in a combination of two or more.

Ultraviolet Absorber

In one embodiment, the modified polyolefin composition may contain an ultraviolet absorber as long as the effects of the present invention are not impaired. Examples of ultraviolet absorbers include benzophenone-based ultraviolet absorbers, benzotriazole-based ultraviolet absorbers, triazine-based ultraviolet absorbers, salicylic acid-based ultraviolet absorbers, cyanoacrylate-based ultraviolet absorbers, benzoxazine-based ultraviolet absorbers, and the like. These ultraviolet absorbers can be used alone or in a combination of two or more.

The amount of ultraviolet absorber used is preferably 0.01 to 10 parts by mass, and more preferably 0.1 to 5 parts by mass, per 100 parts by mass of the modified polyolefin resin composition.

Light Stabilizer

In one embodiment, the modified polyolefin composition may contain a light stabilizer as long as the effects of the present invention are not impaired. Examples of light stabilizers include hindered amine-based light stabilizers.

Specific examples of hindered amine-based light stabilizers include bis(1,2,2,6,6-pentamethyl-4-piperidinyl) sebacate, methyl(1,2,2,6,6-pentamethyl-4-piperidinyl) sebacate, 2,4-bis[N-butyl-N-(1-cyclohexyloxy-2,2,6,6-tetramethylpiperidin-4-yl)amino]-6-(2-hydroxyethylamine)-1,3,5-triazine, decanedioic acid bis(2,2,6,6-tetramethyl-1-(octyloxy)-4-piperidinyl) ester, and the like. These can be used alone or in a combination of two or more.

The amount of light stabilizer used is preferably 0.01 to 10, and more preferably 0.1 to 1 part by mass, per 100 parts by mass of the modified polyolefin resin composition.

Sensitizer

In one embodiment, the modified polyolefin composition may contain a sensitizer as long as the effects of the present invention are not impaired. Examples of sensitizers include unsaturated ketone compounds, such as chalcone and dibenzalacetone; 1,2-diketone compounds, such as benzyl and camphorquinone; benzoin compounds, fluorene compounds, naphthoquinone compounds, anthraquinone compounds, xanthene compounds, thioxanthene compounds, xanthone compounds, thioxanthone compounds, coumarin compounds, ketocoumarin compounds; polymethine dyes, such as cyanine compounds, merocyanine compounds, and oxonol compounds; acridine compounds, azine compounds, thiazine compounds, oxazine compounds, indoline compounds, azulene compounds, azulenium compounds, squarylium compounds, porphyrin compounds, tetraphenylporphyrin compounds, triarylmethane compounds, tetrabenzoporphyrin compounds, tetrapyrazinoporphyrazine compounds, phthalocyanine compounds, tetraazaporphyrazine compounds, tetraquinoxalyloporphyrazine compounds, naphthalocyanine compounds, subphthalocyanine compounds, pyrylium compounds, thiopyrylium compounds, tetraphyrin compounds, annulene compounds, spiropyran compounds, spirooxazine compounds, thiospiropyran compounds, metal arene complexes, organic ruthenium complexes, Michler's ketone compounds, biimidazole compounds, and the like. These can be used alone or in a combination of two or more.

The amount of sensitizer used is preferably 0.01 to 10 parts by mass, and more preferably 0.1 to 5 parts by mass, per 100 parts by mass of the modified polyolefin resin composition.

Surfactant

In one embodiment, the modified polyolefin resin composition may contain a surfactant as long as the effects of the present invention are not impaired. Examples of surfactants include nonionic surfactants, anionic surfactants, cationic surfactants, amphoteric surfactants, and the like. These surfactants can be used alone or in a combination of two or more. Of these, it is preferable to use a nonionic surfactant or an anionic surfactant, and more preferable to use a nonionic surfactant, in terms of improving the stability of the modified polyolefin resin composition.

Examples of nonionic surfactants include polyoxyethylene alkyl ethers, polyoxypropylene alkyl ethers, polyoxyethylene alkyl phenyl ethers, polyoxypropylene alkyl phenyl ethers, polyoxyethylene styrenated phenyl ethers, polyoxypropylene styrenated phenyl ethers, polyoxyethylene fatty acid esters, polyoxypropylene fatty acid esters, polyoxyethylene sorbitan fatty acid esters, polyoxypropylene sorbitan fatty acid esters, polyoxyethylene alkyl amides, polyoxypropylene alkyl amides, polyoxyethylene lanolin alcohol ethers, polyoxypropylene lanolin alcohol ethers, polyoxyethylene lanolin fatty acid esters, polyoxypropylene lanolin fatty acid esters, and (polyoxyethylene oxypropylene) block copolymers. These can be used alone or in a combination of two or more. As nonionic surfactants, known commercial products can be widely used, and examples include the Emulmin series (manufactured by Sanyo Chemical Industries, Ltd.), the Noigen series (manufactured by DKS Co., Ltd.), and the Blaunon series (manufactured by Aoki Oil Industrial Co., Ltd.).

Examples of anionic surfactants include higher alkyl sulfuric ester salts, alkylaryl polyoxyethylene sulfuric ester salts, higher fatty acid salts, alkylaryl sulfonic acid salts, and alkyl phosphoric ester salts. These can be used alone or in a combination of two or more. As anionic surfactants, known commercial products can be widely used, and examples include the Neocol series (manufactured by DKS Co. Ltd.) and the Hitenol series (manufactured by DKS Co. Ltd.).

The amount of surfactant used is preferably 1 to 60 parts by mass, more preferably 3 to 40 parts by mass, and even more preferably 5 to 30 parts by mass, per 100 parts by mass of the acid-modified polyolefin resin (A), from the viewpoint of improving the stability of the modified polyolefin resin composition.

Various Additives

In one embodiment, the modified polyolefin resin composition may contain various additives, as necessary. Examples of such various additives include tackifiers, film-forming aids, antifoaming agents, anti-sagging agents, wetting agents, and the like.

Examples of tackifiers include rosin, dammar, polymerized rosin, hydrogenated rosin, ester rosin, rosin-modified maleic acid resin, polyterpene resin, petroleum resin, cyclopentadiene resin, phenol resin, xylene resin, coumarone-indene resin, and the like. These can be used alone or in a combination of two or more.

The amount of tackifier used is preferably 1 to 50 parts by mass, and more preferably 10 to 25 parts by mass, per 100 parts by mass of the modified polyolefin resin composition.

Organic Solvent

In one embodiment, the modified polyolefin resin composition may contain or may not contain an organic solvent.

In one embodiment, when the modified polyolefin resin composition contains an organic solvent, the modified polyolefin resin composition preferably contains a small amount of organic solvent, in terms of environmental and hygiene aspects. In that case, the content of the organic solvent is preferably 20 parts by mass or less, more preferably 10 parts by mass or less, even more preferably 5 parts by mass or less, still even more preferably 3 parts by mass or less, and particularly preferably 1 part by mass or less, per 100 parts by mass of the modified polyolefin resin composition. In one embodiment, when the modified polyolefin resin composition contains an organic solvent, the viscosity of the modified polyolefin resin composition is further reduced, which has the advantage of improving coating properties.

In one embodiment, when the modified polyolefin resin composition does not contain an organic solvent, the modified polyolefin resin composition can be suitably used as the main agent of a solvent-free radically curable binder. In one embodiment, "solvent-free" means that an organic solvent is not intentionally added to the modified polyolefin resin composition. An embodiment in which the organic solvent used in the production of the acid-modified polyolefin resin (A) remains falls under the category of "solvent-free."

Examples of organic solvents include

aromatic hydrocarbons, such as benzene, toluene, and xylene;
aliphatic hydrocarbons, such as hexane, heptane, octane, and decane;
alicyclic hydrocarbons, such as cyclohexane, cyclohexene, methylcyclohexane, and ethylcyclohexane;
halogenated hydrocarbons, such as trichloroethylene, dichloroethylene, chlorobenzene, and chloroform;
alcohol-based solvents, such as methanol, ethanol, isopropyl alcohol, butanol, pentanol, 1-hexanol, 2-ethylhexanol, 2-methylcyclohexanol, phenol, and 2-heptyl alcohol;
ketone-based solvents, such as acetone, methyl isobutyl ketone, methyl ethyl ketone, pentanone, hexanone, cyclohexanone, isophorone, and acetophenone;
cellosolve-based solvents, such as methyl cellosolve and ethyl cellosolve;
ester-based solvents, such as methyl acetate, ethyl acetate, butyl acetate, methyl propionate, ethyl propionate, and butyl formate; and
ether-based solvents, such as ethylene glycol mono-n-butyl ether, ethylene glycol mono-iso-butyl ether, ethylene glycol mono-tert-butyl ether, diethylene glycol mono-n-butyl ether, diethylene glycol mono-iso-butyl ether, triethylene glycol mono-n-butyl ether, tetraethylene glycol mono-n-butyl ether, dibenzyl ether, diphenyl ether, and butylphenyl ether. These can be used alone or in a combination of two or more.

Method for Producing Modified Polyolefin Resin Composition

As the method for producing a modified polyolefin resin composition of the present invention, known methods can be widely used. For example, the method described in the following steps (1) to (4) can be used.

Step (1): The acid-modified polyolefin resin (A) and the compound having a polymerizable unsaturated group (C) are placed in a stirrer equipped with a heating device and kneaded while heating.
Step (2): The polyetheramine (B) is further added to the stirrer and kneaded while heating.

Step (3): The ionic liquid (D) is further added to the stirrer and kneaded while heating.

Step (4): Thereafter, the mixture is cooled to room temperature and filtered to obtain a modified polyolefin resin composition.

In step (1), the heating temperature during kneading is generally 50 to 200°C, preferably 60°C to 150°C, and more preferably 70°C to 120°C. The kneading time varies depending on the heating temperature etc., but is generally 10 minutes to 120 minutes, preferably 15 minutes to 90 minutes, and more preferably 20 minutes to 60 minutes.

In step (2), the heating temperature during kneading is generally 50 to 200°C, preferably 60°C to 150°C, and more preferably 70°C to 120°C. The kneading time varies depending on the heating temperature etc., but is generally 10 minutes to 120 minutes, preferably 15 minutes to 90 minutes, and more preferably 20 minutes to 75 minutes.

In step (3), the heating temperature during kneading is generally 50 to 200°C, preferably 60°C to 150°C, and more preferably 70°C to 120°C. The kneading time varies depending on the heating temperature etc., but is generally 10 minutes to 120 minutes, preferably 15 minutes to 90 minutes, and more preferably 20 minutes to 75 minutes.

In step (4), filtration can be carried out using, for example, a wire mesh with an opening of 50 $\mu$m to 300 $\mu$m.

Cured Product

The cured product of this embodiment is a cured product obtained by curing the modified polyolefin resin composition of this embodiment. In other words, the cured product of this embodiment is a product obtained by curing the modified polyolefin resin composition of this embodiment. Hereinafter, the cured product is simply referred to as "the cured product of this embodiment."

Use

The modified polyolefin resin composition of this embodiment and the cured product of this embodiment can be suitably used for polyolefin substrates. Examples of polyolefin substrates include blocks (plates, rods, spheres, etc.), sheets, films, threads, and fabrics (woven fabrics, knitted fabrics, nonwoven fabrics, etc.) processed from polyolefins. Of these polyolefin substrates, sheets and films are preferred from the viewpoint of production. The film thickness may be 5 $\mu$m to 100 $\mu$m. Examples of polyolefins include polypropylene, polyethylene, ethylene-propylene copolymers, ethylene-propylene-diene copolymers, polybutene, poly(4-methyl-1-pentene), and the like. The modified polyolefin resin composition of this embodiment and the cured product of this embodiment can be particularly suitably used for polypropylene substrates.

The modified polyolefin resin composition of this embodiment and the cured product of this embodiment can be suitably applied to paints for molded articles, inks, adhesives, sealants, primers, coating agents, in-mold coating paints, and the like. The modified polyolefin resin composition of this embodiment and the cured product of this embodiment can be particularly suitably used for inks for polyolefin substrates, adhesives for polyolefin substrates, primers for polyolefin substrates, paints for polyolefin substrates, and in-mold coating paints for polyolefin substrates.

A coating film can be obtained from the modified polyolefin resin composition of this embodiment. The coating film can be particularly suitably used for metal products, electronic devices, packaging materials, automotive parts, and the like.

The method for producing a coating film from the modified polyolefin resin composition of this embodiment is, for example, a method in which the modified polyolefin resin composition of this embodiment is uniformly applied to the surface of various substrates and subjected to heat treatment (e.g., baking treatment). As a result, a uniform coating film can be formed on various substrate surfaces. Examples of the coating method include gravure coating, curtain flow coating, Mayer bar coating, dip coating, brush coating, roll coating, spray coating, and the like. The amount of the modified polyolefin resin composition applied to the substrate is not particularly limited, and is appropriately selected depending on the application. It is preferable that the thickness of the dry coating film is within the range of 1 $\mu$m to 100 $\mu$m. The heat treatment can be carried out using a hot-air circulation oven, an infrared heater, or the like. Another method is to mold a plastic substrate in a mold, inject the modified polyolefin resin composition of this embodiment between the mold and the substrate, and then apply heat and pressure to form a coating film. The heating temperature is generally 60 to 200°C. The heating time is generally 15 seconds to 20 minutes.

The present invention provides inventions according to the following aspects.

Item 1. A modified polyolefin resin composition comprising an acid-modified polyolefin resin (A), a polyetheramine (B), a compound having a polymerizable unsaturated group (C), and an ionic liquid (D).

Item 2. The modified polyolefin resin composition according to Item 1, wherein a cation constituting the ionic liquid (D) is at least one ammonium cation selected from the group consisting of tetraalkylammonium ions, imidazolium ions, pyridinium ions, pyrazolium ions, pyrrolium ions, pyrrolinium ions, pyrrolidinium ions, and piperidinium ions.

Item 3. The modified polyolefin resin composition according to Item 1 or 2, wherein the ionic liquid (D) is contained in an amount of preferably 0.1 to 20 parts by mass, more preferably 0.5 to 15 parts by mass, and even more preferably 0.8 to 12.5 parts by mass, per 100 parts by mass of the modified polyolefin resin composition.

Item 4. The modified polyolefin resin composition according to any one of Items 1 to 3, wherein the cation of the ionic liquid (D) has a polymerizable unsaturated group.

Item 5. The modified polyolefin resin composition according to any one of Items 1 to 4, wherein the acid-modified polyolefin resin (A) is contained in an amount of preferably 5 to 120 parts by mass, more preferably 10 to 90 parts by mass, more preferably 12.5 to 70 parts by mass, even more preferably 15 to 50 parts by mass, still more preferably 17.5 to 40 parts by mass, and particularly preferably 20 to 35 parts by mass, per 100 parts by mass of the compound having a polymerizable unsaturated group (C).

Item 6. The modified polyolefin resin composition according to any one of Items 1 to 5, wherein the compound having a polymerizable unsaturated group (C) preferably comprises a compound having a hydroxyl group and one or more polymerizable unsaturated groups, more preferably a compound having a hydroxyl group and one to four (one, two, three, or four) polymerizable unsaturated groups, and even more preferably a compound having a hydroxyl group and one or two polymerizable unsaturated groups.

Item 7. The modified polyolefin resin composition according to any one of Items 1 to 6, wherein the compound having a polymerizable unsaturated group (C)

preferably comprises a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or more polymerizable unsaturated groups,
more preferably comprises a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one to four (one, two, three, or four) polymerizable unsaturated groups, and
still more preferably comprises a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or two polymerizable unsaturated groups.

Item 8. The modified polyolefin resin composition according to any one of Items 1 to 7, wherein the polyetheramine (B) is contained in an amount of generally 6 to 100 parts by mass, preferably 10 to 90 parts by mass, more preferably 15 to 80 parts by mass, even more preferably 20 to 70 parts by mass, still more preferably 25 to 60 parts by mass, and particularly preferably 30 to 50 parts by mass, per 100 parts by mass of the acid-modified polyolefin resin (A).

Item 9. The modified polyolefin resin composition according to any one of Items 1 to 8, wherein the polyetheramine (B) has a polyether chain, and the polyether chain has a structure comprising at least one selected from the group consisting of:

a structure represented by $-(O-CH_2CH_2)x-$, wherein x is an integer from 2 to 120,
a structure represented by $-(O-CH_2CH(CH_3))y_1-$, wherein $y_1$ is an integer from 2 to 90,
a structure represented by $-(O-CH_2CH_2CH_2)y_2-$, wherein $y_2$ is an integer from 2 to 90,
a structure represented by $-(O-CH_2CH_2CH_2CH_2)z_1-$, wherein $z_1$ is an integer from 2 to 80,
a structure represented by $-(O-CH(CH_3)CH_2CH_2)z_2-$, wherein $z_2$ is an integer from 2 to 80,
a structure represented by $-(O-CH_2CH(CH_3)CH_2)z_3-$, wherein $z_3$ is an integer from 2 to 80, and
a structure represented by $-(O-CH_2CH_2CH(CH_3))z_4-$, wherein $z_4$ is an integer from 2 to 80.

Item 10. The modified polyolefin resin composition according to any one of Items 1 to 9,

wherein the polyetheramine (B) preferably has a primary amino group or a secondary amino group at one end thereof and has a weight average molecular weight (Mw) of 200 to 50000,
the polyetheramine (B) more preferably has a primary amino group or a secondary amino group at one end thereof and has an Mw of 300 to 10000, and
the polyetheramine (B) even more preferably has a primary amino group at one end thereof and has an Mw of 500 to 5000.

Item 11. The modified polyolefin resin composition according to any one of Items 1 to 10, wherein the polyetheramine (B) has an HLB value of preferably 2 to 20, more preferably 5 to 19, and even more preferably 8 to 18.

Item 12. The modified polyolefin resin composition according to any one of Items 1 to 11, wherein the compound having a polymerizable unsaturated group (C) has a weight average molecular weight (Mw) of preferably 5000 or less, more preferably 2000 or less, and even more preferably 1000 or less.

Item 13. The modified polyolefin resin composition according to any one of Items 1 to 12, wherein the compound having a polymerizable unsaturated group (C)

preferably comprises a compound having a hydroxyl group and one or more polymerizable unsaturated groups, and a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or more polymerizable unsaturated groups, more preferably comprises a compound having a hydroxyl group and one to four (one, two, three, or four) polymerizable unsaturated groups, and a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one to four (one, two, three, or four) polymerizable unsaturated groups, and even more preferably comprises a compound having a hydroxyl group and one or two polymerizable unsaturated groups, and a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or two polymerizable unsaturated groups.

Item 14. The modified polyolefin resin composition according to any one of Items 1 to 13, wherein the acid-modified polyolefin resin (A) is a graft polymer having a structure with an $\alpha,\beta$-unsaturated carboxylic or an acid anhydride thereof grafted to a polyolefin resin.

Item 15. The modified polyolefin resin composition according to Item 14, wherein the polyolefin resin is as follows:

- preferably at least one copolymer selected from the group consisting of homopolypropylene, a propylene-$\alpha$-olefin copolymer, homopolyethylene, an ethylene-$\alpha$-olefin copolymer, poly-1-butene, and a 1-butene-$\alpha$-olefin copolymer,
- more preferably homopolypropylene and/or a propylene-$\alpha$-olefin copolymer, and
- even more preferably homopolypropylene or a propylene-$\alpha$-olefin copolymer.

Item 16. The modified polyolefin resin composition according to any one of Items 1 to 15, wherein the content ratio of the acid-modified polyolefin resin (A) to the total mass of the modified polyolefin resin composition is preferably 1 to 60 mass%, more preferably 4 to 50 mass%, even more preferably 7 to 40 mass%, still more preferably 10 to 35 mass%, and particularly preferably 15 to 30 mass%.

Item 17. The modified polyolefin resin composition according to any one of Items 1 to 16, wherein the polyetheramine (B) has a polyether chain, and the polyether chain has a structure comprising at least one selected from the group consisting of:

a structure represented by formula 1: $-(O-CH_2CH_2)x-$, wherein x is an integer from 2 to 120,
a structure represented by formula 2-1: $-(O-CH_2CH(CH_3))y_1-$, wherein $y_1$ is an integer from 2 to 90, and
a structure represented by formula 3-1: $-(O-CH_2CH_2CH_2CH_2)z_1-$, wherein $z_1$ is an integer from 2 to 80.

Item 18. The modified polyolefin resin composition according to any one of Items 1 to 17, wherein the polyetheramine (B) is a compound represented by the following formula 1A:

$$R^1-(O-R^2)a-R^3 \qquad \text{Formula 1A}$$

wherein $R^1$ and $R^3$ each independently represent an amino group or a linear or branched alkyl group having 1 to 10 (1, 2, 3, 4, 5, 6, 7, 8, 9 or 10) carbon atoms and optionally having an amino group, $R^2$ represents a linear or branched alkylene group having 2 to 4 (2, 3, or 4) carbon atoms, and a is an integer from 1 to 120.

Item 19. The modified polyolefin resin composition according to Item 18, wherein in formula 1A, $R^1$ represents a linear or branched alkyl group having 1 to 10 (1, 2, 3, 4, 5, 6, 7, 8, 9, or 10) carbon atoms, $R^2$ represents a linear or branched alkylene group having 2 to 4 (2, 3, or 4) carbon atoms, $R^3$ represents an amino group, and a is an integer from 1 to 120.

Item 20. The modified polyolefin resin composition according to any one of Items 1 to 19, wherein the content ratio of the polyetheramine (B) to the total mass of the modified polyolefin resin composition is generally 0.5 to 40 mass%, preferably 1 to 30 mass%, more preferably 2 to 20 mass%, even more preferably 3 to 15 mass%, still more preferably 4 to 12.5 mass%, and particularly preferably 5 to 10 mass%.

Item 21. The modified polyolefin resin composition according to any one of Items 1 to 20, wherein the compound having a polymerizable unsaturated group (C) has a weight average molecular weight (Mw) of preferably 100 or more and 5000 or less, more preferably 120 or more and 2000 or less, and even more preferably 140 or more and 1000 or less.

Item 22. The modified polyolefin resin composition according to any one of Items 1 to 21, wherein one or two compounds having a polymerizable unsaturated group (C) are contained.

Item 23. The modified polyolefin resin composition according to any one of Items 6 to 22, wherein the number of the hydroxyl groups is preferably one or two, and more preferably 1.

Item 24. The modified polyolefin resin composition according to any one of Items 1 to 23, wherein the content ratio of the compound having a polymerizable unsaturated group (C) to the total mass of the modified polyolefin resin composition is preferably 10 to 95 mass%, more preferably 20 to 90 mass%, even more preferably 30 to 85 mass%, and still more preferably 40 to 80 mass%.

Item 25. The modified polyolefin resin composition according to any one of Items 1 to 24, wherein the polymerizable unsaturated group in the compound having a polymerizable unsaturated group (C) is as follows:

- preferably at least one selected from the group consisting of an acryloyl group, a methacryloyl group, an acryloyloxy group, a methacryloyloxy group, a vinyl group, an allyl group, a propenyl group, an isopropenyl group, a maleimide group, and a vinyl ether group,
- more preferably at least one selected from the group consisting of an acryloyl group, a methacryloyl group, an acryloyloxy group, and a methacryloyloxy group, and
- even more preferably an acryloyloxy group and/or a methacryloyloxy group.

Item 26. The modified polyolefin resin composition according to any one of Items 1 to 25, wherein the ionic liquid (D) is composed of a cation and an anion.

Item 27. The modified polyolefin resin composition according to any one of Items 1 to 26, wherein the anion is preferably a sulfonate anion, a carboxylate anion, a phosphate anion, a sulfonamide anion, or a sulfonimide anion, and more preferably a sulfonimide anion.

Item 28. The modified polyolefin resin composition according to any one of Items 4 to 27, wherein the polymerizable unsaturated group in the cation of the ionic liquid (D) is

preferably at least one selected from the group consisting of an acryloyl group, a methacryloyl group, an acryloyloxy group, and a methacryloyloxy group,
more preferably an acryloyloxy group and/or a methacryloyloxy group, and
even more preferably an acryloyloxy group.

Item 29. The modified polyolefin resin composition according to any one of Items 4 to 28, wherein the number of the polymerizable unsaturated groups in the cation of the ionic liquid (D) is 1 or 2.

Item 30. The modified polyolefin resin composition according to any one of Items 1 to 29, wherein the total content ratio of the acid-modified polyolefin resin (A), the polyetheramine (B), the compound having a polymerizable unsaturated group (C), and the ionic liquid (D) to the total mass of the modified polyolefin resin composition is preferably in the order of more than 50 mass%, 55 mass% or more, 60 mass% or more, 65 mass% or more, 70 mass% or more, 75 mass% or more, 80 mass% or more, 85 mass% or more, 90 mass% or more, 92.5 mass% or more, 95 mass% or more, 97.5 mass% or more, 99 mass% or more, 99.5 mass% or more, 99.9 mass% or more, 99.95 mass% or more, and 99.99 mass% or more.

Item 31. A cured product obtained by curing the modified polyolefin resin composition of any one of Items 1 to 30.

Item 32. An ink comprising the modified polyolefin resin composition of any one of Items 1 to 30 or the cured product of Item 31.

Item 33. An adhesive comprising the modified polyolefin resin composition of any one of Items 1 to 30 or the cured product of Item 31.

Item 34. A primer comprising the modified polyolefin resin composition of any one of Items 1 to 30 or the cured product of Item 31.

Item 35. A paint comprising the modified polyolefin resin composition of any one of Items 1 to 30 or the cured product of Item 31.

Item 36. An in-mold coating paint comprising the modified polyolefin resin composition of any one of Items 1 to 30 or the cured product of Item 31.

Examples

Next, the present invention is described in detail based on Examples; however, the present invention is not limited by the following Examples. Hereinafter, "room temperature" refers to a temperature within the range of 20°C to 25°C.

(1) Measurement of Weight Average Molecular Weight (Mw) by High-temperature GPC

The measurement was performed by using orthodichlorobenzene as a solvent at 140°C with a GPC150-C Plus (manufactured by Waters Corporation; column: GMH6-HT + GMH6-HTL manufactured by Tosoh Corporation). The weight average molecular weight (Mw) was calculated based on polystyrene of known molecular weight as the standard substance.

(2) Measurement of Melting Point by Differential Scanning Calorimeter (DSC)

In accordance with JIS K7121-2012, with a DSC meter (manufactured by Seiko Instruments Inc.), about 5 mg of a sample was maintained in a heated and melted state at 150°C for 10 minutes and then cooled at a rate of 10°C/minute until the sample was stabilized and maintained at -50°C. The sample was further heated at a rate of 10°C/minute to 150°C, and the peak melting temperature at which the sample was melted was measured and evaluated as the melting point.

Production Example 1

280 g of a propylene-$\alpha$-olefin copolymer (propylene content: 70 mol%), 62 g of maleic anhydride, 7 g of dicumyl peroxide, and 420 g of toluene were added to an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. The resulting resin was dried under reduced pressure to obtain a solid of acid-modified polyolefin resin (MPO-1). The results of infrared absorption spectroscopy indicated that the total content of the maleic anhydride component and maleic acid component in MPO-1 was 2.0 mass%, and that the acid value of the maleic anhydride component and maleic acid component in MPO-1 was 22.4 mgKOH/g. The weight average molecular weight (Mw) of MPO-1 measured by high-temperature GPC was 70000, and the melting point measured by DSC was 70°C.

Production Example 2

280 g of a propylene homopolymer (homopolypropylene, propylene content: 100 mol%), 36 g of maleic anhydride, 5.6 g of dicumyl peroxide, and 420 g of toluene were placed in an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. The resulting resin was dried under reduced pressure to obtain a solid of acid-modified polyolefin resin (MPO-2). The results of infrared absorption spectroscopy indicated that the total content of the maleic anhydride component and maleic acid component in MPO-2 was 1.8 mass%, and that the acid value of the maleic anhydride component and maleic acid component in MPO-2 was 20.2 mgKOH/g. The weight average molecular weight (Mw) of MPO-2 measured by high-temperature GPC was 40000, and the melting point measured by DSC was 75°C.

Production Example 3

280 g of a propylene-$\alpha$-olefin copolymer (propylene content: 94 mol%), 14 g of maleic anhydride, 5.6 g of dicumyl peroxide, and 420 g of toluene were placed in an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. After drying under reduced pressure, 280 g of the resulting maleic anhydride-modified polyolefin resin and 2520 g of chloroform were placed in an autoclave equipped with a stirrer, which was then purged with nitrogen for about 5 minutes. Thereafter, the autoclave was heated to 110°C to fully dissolve the resin. Subsequently, 1.4 g of tert-butylperoxy-2-ethylhexanoate was added, and a predetermined amount of chlorine gas was blown into the autoclave. The reaction solvent, chloroform, was distilled off under reduced pressure, and the residue was dried, thereby obtaining a solid of acid-modified chlorinated polyolefin resin (CPO-1). The weight average molecular weight (Mw) of CPO-1 measured by high-temperature GPC was 80000, and the melting point measured by DSC was 75°C. Further, the content of the maleic anhydride component in CPO-1 was 1.0 mass%, the chlorine content of CPO-1 was 21 mass%, and the acid value of the maleic anhydride component was 11.2 mgKOH/g.

Materials Used

The materials used in the Examples and Comparative Examples are as follows

Acid-modified polyolefin resin (A)

- MPO-1 obtained in Production Example 1 (total content of maleic anhydride component and maleic acid component = 2.0 mass%, Mw measured by high-temperature GPC = 70000, melting point measured by DSC = 70°C)
- MPO-2 obtained in Production Example 2 (total content of maleic anhydride component and maleic acid component = 1.8 mass%, Mw measured by high-temperature GPC = 40000, melting point measured by DSC = 75°C)
- CPO-1 obtained in Production Example 3 (chlorine content = 21 mass%, maleic anhydride component content = 1.0 mass%, Mw measured by high-temperature GPC = 80000, melting point measured by DSC = 75°C)

Polyetheramine (B)

- JEFFAMINE M-2070 (Mw = 2000, HLB value = 13.8) manufactured by Huntsman (number of primary amino groups = 1, number of secondary amino groups = 0)
- JEFFAMINE M-1000 (Mw = 1000, HLB value = 16.1) manufactured by Huntsman (number of primary amino groups = 1, number of secondary amino groups = 0)
- JEFFAMINE M-2005 (Mw = 2000, HLB value = 2.7) manufactured by Huntsman (number of primary amino groups = 1, number of secondary amino groups = 0)

Compound having a polymerizable unsaturated group (C)

Compound having an alkyleneoxy group and two polymerizable unsaturated groups

- Neopentyl glycol diacrylate (Mw = 212) (manufactured by Tokyo Chemical Industry Co., Ltd.)
- 1,9-Nonanediol diacrylate (Mw = 268) (manufactured by Tokyo Chemical Industry Co., Ltd.)
- Tripropylene glycol diacrylate (Mw = 300) (manufactured by Tokyo Chemical Industry Co., Ltd.)
- Polypropylene glycol diacrylate (Polypropylene Glycol #700 Diacrylate, number of repeating units = 12, Mw = 808, manufactured by Shin Nakamura Chemical Co., Ltd., NK Ester (registered trademark) APG-700)

Compound having a $C_8$ branched alkyl group and one polymerizable unsaturated group

- 2-Ethylhexyl acrylate (Mw = 184) (manufactured by Tokyo Chemical Industry Co., Ltd.)

Compound having a hydroxyl group and one polymerizable unsaturated group

- 4-Hydroxybutyl acrylate (Mw = 144) (manufactured by Tokyo Chemical Industry Co., Ltd.)

Compound having a hydroxyl group and two polymerizable unsaturated groups

- 2-Hydroxy-3-methacrylpropyl acrylate (Mw = 214) (manufactured by Tokyo Chemical Industry Co., Ltd.)

Ionic liquid (D)

- (2-Acryloyloxyethyl)trimethylammonium bis(trifluoromethanesulfonyl)imide (manufactured by Koei Chemical Industry Co., Ltd.)
- Methyltrioctylammonium bis(trifluoromethanesulfonyl)imide (manufactured by Koei Chemical Industry Co., Ltd.)

Example 1

In a 200 ml four-necked flask equipped with a condenser, a thermometer, and a stirrer, 20 g of MPO-1 as the acid-modified polyolefin resin (A), and 50 g of neopentyl glycol diacrylate and 30 g of 2-hydroxy-3-methacrylpropyl acrylate as the compounds having a polymerizable unsaturated group (C) were placed. Then, the internal temperature was raised to 90°C, and the mixture was dissolved by heating for 30 minutes. Thereafter, 8 g of JEFFAMINE M-2070 was added as the polyetheramine (B), followed by stirring at 90°C for 1 hour. Further, 1.0 g of (2-acryloyloxyethyl)trimethylammonium bis(trifluoromethanesulfonyl)imide was added as the ionic liquid (D), followed by stirring at 90°C for 1 hour. Then, the mixture was cooled to room temperature and filtered through a wire mesh with an opening of 149 $\mu$m, thereby obtaining a modified polyolefin resin composition (a).

Examples 2 to 18

Modified polyolefin resin compositions (b) to (r) were obtained in the same manner as in Example 1, except that the types and amounts of the acid-modified polyolefin resin (A), polyetheramine (B), compounds having a polymerizable unsaturated group (C), and ionic liquid (D) were changed as shown in Tables 1 and 2 below.

Comparative Example 1

In a 200 ml four-necked flask equipped with a condenser, a thermometer, and a stirrer, 20 g of MPO-1 as the acid-modified polyolefin resin (A), and 50 g of neopentyl glycol diacrylate and 30 g of 2-hydroxy-3-methacrylpropyl acrylate as the compounds having a polymerizable unsaturated group (C) were placed. Then, the internal temperature was raised to 90°C, and the mixture was dissolved by heating for 30 minutes. Thereafter, 8 g of JEFFAMINE M-2070 was added as the polyetheramine (B), followed by stirring at 90°C for 1 hour. Then, the mixture was cooled to room temperature and filtered through a wire mesh with an opening of 149 $\mu$m, thereby obtaining a modified polyolefin resin composition (s). In Comparative Example 1, the ionic liquid (D) was not used.

Comparative Example 2

In a 200 ml four-necked flask equipped with a condenser, a thermometer, and a stirrer, 50 g of neopentyl glycol diacrylate and 30 g of 2-hydroxy-3-methacrylpropyl acrylate as the compounds having a polymerizable unsaturated group (C) were placed. Then, the internal temperature was raised to 90°C, and the mixture was dissolved by heating for 30 minutes. Thereafter, 8 g of JEFFAMINE M-2070 was added as the polyetheramine (B), followed by stirring at 90°C for 1 hour. 1.0 g of (2-acryloyloxyethyl)trimethylammonium bis(trifluoromethanesulfonyl)imide was then added as the ionic liquid (D), followed by stirring at 90°C for 1 hour. Then, the mixture was cooled to room temperature and filtered through a wire mesh with an opening of 149 $\mu$m, thereby obtaining a resin composition (t). In Comparative Example 2, the acid-modified polyolefin resin (A) was not used.

Comparative Example 3

In a 200 ml four-necked flask equipped with a condenser, a thermometer, and a stirrer, 20 g of MPO-1 as the acid-modified polyolefin resin (A), and 50 g of neopentyl glycol diacrylate and 30 g of 2-hydroxy-3-methacrylpropyl acrylate as the compounds having a polymerizable unsaturated group (C) were placed. Then, the internal temperature was raised to 90°C, and the mixture was dissolved by heating for 30 minutes. Thereafter, 1.0 g of (2-acryloyloxyethyl)trimethylammonium bis(trifluoromethanesulfonyl)imide was then added as the ionic liquid (D), followed by stirring at 90°C for 1 hour. Then, the mixture was cooled to room temperature; however, the resin precipitated, failing to obtain a modified polyolefin resin composition. In Comparative Example 3, the polyetheramine (B) was not used.

Comparative Example 4

In a 200 ml four-necked flask equipped with a condenser, a thermometer, and a stirrer, 80 g of 1-propanol was placed. Then, the internal temperature was raised to 90°C, followed by dissolving by heating for 30 minutes. Thereafter, 8 g of JEFFAMINE M-2070 was added as the polyetheramine (B), followed by stirring at 90°C for 1 hour. 1.0 g of (2-acryloyloxyethyl)trimethylammonium bis(trifluoromethanesulfonyl)imide was then added as the ionic liquid (D), followed by stirring at 90°C for 1 hour. Then, the mixture was cooled to room temperature and filtered through a wire mesh with an opening of 149 $\mu$m, thereby obtaining a resin composition (u). In Comparative Example 4, the compound having a polymerizable unsaturated group (C) was not used.

(1) Evaluation of Fluidity at 25°C and 80°C

The modified polyolefin resin compositions obtained in the Examples and the resin compositions obtained in the Comparative Examples were visually evaluated for fluidity at 25°C and 80°C immediately after production, fluidity at 25°C and 80°C the next day (24 hours after production), fluidity at 25°C and 80°C after a week (168 hours after production), and fluidity at 25°C and 80°C after two weeks (336 hours after production). A composition with fluidity after two weeks was rated "A," a composition with fluidity after a week was rated "B," a composition with fluidity the next day was rated "C," a composition with fluidity only immediately after production was rated "D," and a composition with no fluidity immediately after production was rated "E."

(2) Evaluation of Adhesion

The adhesion of each of the modified polyolefin resin compositions obtained in the Examples to a polypropylene (PP) bumper substrate, an ABS substrate, and a PET substrate, and the adhesion of each of the resin compositions obtained in the Comparative Examples to a PP bumper substrate, an ABS substrate, and a PET substrate were evaluated. Specifically, 0.15 g of tert-butyl-2-ethylperoxyhexanoate was added to 5 g of each of the modified polyolefin resin compositions obtained in the Examples and 5 g of each of the resin compositions obtained in the Comparative Examples, and each mixture was stirred with a magnetic stirrer at room temperature for 30 minutes. The mixture obtained by stirring was applied to a PP (polypropylene) bumper substrate washed with isopropyl alcohol, an ABS substrate washed with isopropyl alcohol, and a PET substrate washed with isopropyl alcohol, at room temperature using a No. 16 bar coater so that each coating film after drying had a thickness of about 10 $\mu$m. After baking at 110°C for 10 minutes, the substrates were left to stand for 72 hours in an atmosphere of 25°C and 60% relative humidity to prepare test plates. A grid of 100 squares was made on each test plate with 1 mm intervals, reaching down to the base. Cellophane tape was pressed onto the squares and then peeled off at an angle of 90 degrees relative to the coated surface. This operation was performed three times. A coating film with no peeling even after three tries was rated "A." A coating film that had peeled after the third try was rated "B." A coating film that had peeled after the first or second try was rated "C."

(3) Evaluation of Initial Antistatic Properties

Each mixture prepared in the same manner as in (2) above was individually applied to a PET film (A4360, manufactured by Toyobo Co., Ltd.) at room temperature using a No. 5 bar coater so that the film thickness after drying was 10 $\mu$m. Then, after the coating film was allowed to stand for 12 hours in an atmosphere of 25°C and 50% relative humidity, the surface resistance ($\Omega$/sq.) of the coating film was measured according to JIS K-6271-2008 (guarded-electrode system) under the same atmosphere. A coating film having a surface resistance of less than $10^{11}$ $\Omega$/sq. was rated "A," a coating film having a surface resistance of $10^{11}$ $\Omega$/sq. or more and less than $10^{13}$ $\Omega$/sq. was rated "B," and a coating film having a surface resistance of $10^{13}$ $\Omega$/sq. or more was rated "C."

(4) Long-term Antistatic Properties

Each mixture prepared in the same manner as in (2) above was individually applied to a PET film (A4360, manufactured by Toyobo Co., Ltd.) at room temperature using a No. 5 bar coater so that the film thickness after drying was 10 $\mu$m. Then, after the coating film was allowed to stand for 1000 hours in an atmosphere of 25°C and 50% relative humidity, the surface resistance ($\Omega$/sq.) of the coating film was measured according to JIS K-6271-2008 (guarded-electrode system) under the same atmosphere. A coating film having a surface resistance of less than $10^{11}$ $\Omega$/sq. was rated "A," a coating film having a surface resistance of $10^{11}$ $\Omega$/sq. or more and less than $10^{13}$ $\Omega$/sq. was rated "B," and a coating film having a surface resistance of $10^{13}$ Q/sq. or more was rated "C."
Tables 1 and 2 below show the raw materials and their amounts used in the Examples and Comparative Examples, the evaluation results of the modified polyolefin resin compositions (a) to (r) obtained in Examples 1 to 18, the evaluation results of the resin compositions (s) to (u) obtained in Comparative Examples 1, 2, and 4, and the like. For Comparative Example 3, in which no resin composition was obtained, adhesion to each substrate, initial antistatic properties, and long-term antistatic properties were deemed "not evaluable."

Table 1

| | | Unit | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|---|
| Modified polyolefin resin composition | | - | (a) | (b) | (c) | (d) | (e) | (f) | (g) | (h) | (i) | (j) | (k) |
| Acid-modified polyolefin resin (A) | MPO-1 (Production Example 1) | g | 20 | - | - | 5 | 20 | 20 | 20 | - | 20 | 20 | 20 |
| | MPO-2 (Production Example 2) | g | - | 20 | - | - | - | - | - | - | - | - | - |
| | CPO-1 (Production Example 3) | g | - | - | 20 | - | - | - | - | 20 | - | - | - |
| Pdyetheramine (B) | JEFFAMINE M-2070 (Mw = 2000, HLB value = 13.8) | g | 8 | 8 | 8 | 2 | 12 | 1 | 20 | - | - | 8 | 8 |
| | JEFFAMINE M-1000 (Mw = 1000, HLB value = 16.1) | g | - | - | - | - | - | - | - | 8 | - | - | - |
| | JEFFAMINE M-2005 (Mw = 2000, HLB value = 2.7) | g | - | - | - | - | - | - | - | - | 8 | - | - |
| | Number of primary amino groups | Number of groups | 1 | 1 | 1 | 1 | 1 | 1 | 1 | 1 | 1 | 1 | 1 |
| | Number of secondary amino groups | Number of groups | 0 | 0 | 0 | 0 | 0 | 0 | 0 | 0 | 0 | 0 | 0 |

(continued)

| | | | Unit | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|---|---|
| Modified polyolefin resin composition | | | - | (a) | (b) | (c) | (d) | (e) | (f) | (g) | (h) | (i) | (j) | (k) |
| Compound having polymerizable unsaturated group (C) | Compound having alkyleneoxy group and two polymerizable unsaturated groups | Neopentyl glycol diacrylate (Mw = 212) | g | 50 | 50 | 50 | 50 | 10 | 50 | 50 | 50 | 50 | - | - |
| | | 1,9-Nonanediol diacrylate (Mw = 268) | g | - | - | - | - | - | - | - | - | - | - | - |
| | | Tripropylene glycol diacrylate (Mw = 300) | g | - | - | - | - | - | - | - | - | - | 50 | - |
| | | Polypropylene glycol diacrylate (number of repeating units =12, Mw = 808) | g | - | - | - | - | - | - | - | - | - | - | 50 |
| | Compound having $C_8$ branched alkyl group and one polymerizable unsaturated group | 2-Ethylhexyl acrylate (Mw = 184) | g | - | - | - | - | - | - | - | - | - | - | - |
| | Compound having hydroxyl group and one polymerizable unsaturated group | 4-Hydroxybutyl acrylate (Mw = 144) | g | - | - | - | - | - | - | - | - | - | - | - |
| | Compound having hydroxyl group and two polymerizable unsaturated groups | 2-Hydroxy-3-methacrylpropyl acrylate (Mw = 214) | g | 30 | 30 | 30 | 30 | 7 | 30 | 30 | 30 | 30 | 30 | 30 |
| Ionic liquid (D) | | (2-Acryoyloxpthyl)trimethylammonium bis(trifluoromethanesulfonyl)imide | g | 1.0 | 15 | 0.3 | 1.0 | 1.0 | 1.0 | - | 1.0 | 1.0 | 1.0 | 1.0 |
| | | Methyltriactyammonium bis(trifluoromethanesulfonyl)imide | g | - | - | - | - | - | - | 1.0 | - | - | - | - |
| Organic solvent | | Heptane | g | - | - | - | - | - | - | - | - | - | - | - |
| Total mass of (A), (B), (C), and (D) | | | g | 109 | 123 | 108.3 | 88 | 50 | 102 | 121 | 109 | 109 | 109 | 109 |
| Mass of (B) when (A) is 100 g | | | g | 40 | 40 | 40 | 40 | 60 | 5 | 100 | 40 | 40 | 40 | 40 |

EP 4 692 215 A1

(continued)

| | Unit | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|
| Modified polyolefin resin composition | - | (a) | (b) | (c) | (d) | (e) | (f) | (g) | (h) | (i) | (j) | (k) |
| Mass of (A) when (C) is 100 g | g | 25 | 25 | 25 | 6.3 | 118 | 25 | 25 | 25 | 25 | 25 | 25 |
| Mass of (D) when total mass of (A), (B), (C), and (D) is 100 g | g | 0.9 | 12.2 | 0.3 | 1.1 | 2.0 | 1.0 | 0.8 | 0.9 | 0.9 | 0.9 | 0.9 |
| Evaluation results — Fluidity at 25°C | - | A | A | A | A | C | C | A | A | C | A | A |
| Evaluation results — Fluidity at 80°C | - | A | A | A | A | B | B | A | A | B | A | A |
| Evaluation results — Adhesion to PP bumper substrate | - | A | A | A | B | A | A | A | A | A | A | A |
| Evaluation results — Adhesion to ABS substrate | - | A | A | A | A | A | A | A | A | A | A | A |
| Evaluation results — Adhesion to PET substrate | - | A | A | A | A | A | A | A | A | A | A | A |
| Evaluation results — Initial antistatic properties | - | A | A | A | A | A | A | A | A | A | A | A |
| Evaluation results — Long-term antistatic properties | - | A | A | B | A | A | A | A | A | A | A | A |

## Table 2

| | | Unit | Ex. 12 | Ex. 13 | Ex. 14 | Ex. 15 | Ex. 16 | Ex. 17 | Ex. 18 | Comp.Ex. 1 | Comp.Ex. 2 | Comp.Ex. 3 | Comp. Ex. 4 |
|---|---|---|---|---|---|---|---|---|---|---|---|---|---|
| Modified polyolefin resin composition | | - | (l) | (m) | (n) | (o) | (p) | (q) | (r) | (s) | (t) | - | (u) |
| Acid-modified polyolefin resin (A) | MPO-1 (Production Example 1) | g | 20 | 20 | 20 | 20 | 20 | 20 | 20 | 20 | - | 20 | 20 |
| | MPO-2 (Production Example 2) | g | - | - | - | - | - | - | - | - | - | - | - |
| | CPO-1 (Production Example 3) | g | - | - | - | - | - | - | - | - | - | - | - |
| Polyetheramine (B) | JEFFAMINE M-2070 (Mw = 2000, HLB value = 13.8) | g | 8 | 8 | 8 | 8 | 8 | 8 | 8 | 8 | 8 | - | 8 |
| | JEFFAMINE M-1000 (Mw = 1000, HLB value = 16.1) | g | - | - | - | - | - | - | - | - | - | - | - |
| | JEFFAMINE M-2005 (Mw = 2000, HLB value = 2.7) | g | - | - | - | - | - | - | - | - | - | - | - |
| | Number of primary amino groups | Number of groups | 1 | 1 | 1 | 1 | 1 | 1 | 1 | 1 | 1 | - | - |
| | Number of secondary amino groups | Number of groups | 0 | 0 | 0 | 0 | 0 | 0 | 0 | 0 | 0 | - | - |

(continued)

| | | | Unit | Ex. 12 | Ex. 13 | Ex. 14 | Ex. 15 | Ex. 16 | Ex. 17 | Ex. 18 | Comp.Ex. 1 | Comp.Ex. 2 | Comp.Ex. 3 | Comp. Ex. 4 |
|---|---|---|---|---|---|---|---|---|---|---|---|---|---|---|
| Modified polyolefin resin composition | | | - | (l) | (m) | (n) | (o) | (p) | (q) | (r) | (s) | (t) | - | (u) |
| Compound having polymerizable unsaturated group (C) | Compound having alkyieneoxy group and two polymerizable unsaturated groups | Neopentyl glycol diacrylate (Mw = 212) | g | - | 50 | 25 | - | - | 80 | - | 50 | 50 | 50 | - |
| | | 1,9-Nonanediol diacrylate (Mw = 268) | g | - | - | - | - | - | - | 80 | - | - | - | - |
| | | Tripropylene glycol diacrylate (Mw=300) | g | - | - | - | - | - | - | - | - | - | - | - |
| | | Polypropylene glycd diacrylate (number of repeating units = 12, Mw = 808) | g | 65 | - | - | - | - | - | - | - | - | - | - |
| | Compound having $C_8$ branched alkyl group and one polymerizable unsaturated group | 2+Ethylhexyl acrylate (Mw = 184) | g | - | - | 25 | 50 | 80 | - | - | - | - | - | - |
| | Compound having hydroxyl group and one polymerizable unsaturated group | 4-Hydroxybutyl acrylate (Mw = 144) | g | - | 30 | - | - | - | - | - | - | - | - | - |
| | Compound having hydroxyl group and two polymerizable unsaturated groups | 2-Hydroxy-3-methacrylpropyl acrylate (Mw = 214) | g | 15 | - | 30 | 30 | - | - | - | 30 | 30 | 30 | - |

(continued)

| | | Unit | Ex. 12 | Ex. 13 | Ex. 14 | Ex. 15 | Ex. 16 | Ex. 17 | Ex. 18 | Comp.Ex. 1 | Comp.Ex. 2 | Comp.Ex. 3 | Comp. Ex. 4 |
|---|---|---|---|---|---|---|---|---|---|---|---|---|---|
| Modified polyolefin resin composition | | - | (l) | (m) | (n) | (o) | (p) | (q) | (r) | (s) | (t) | - | (u) |
| Ionic liquid (D) | (2-Acryloyloxyethyl)trimethylammonium bis(trifluoromethanesulfonyl)imide | g | 1.0 | 1.0 | 1.0 | 1.0 | 1.0 | 1.0 | 1.0 | - | 1.0 | 1.0 | 1.0 |
| | Methyttroctylammonium bis(trifluoromethanesulfonyl)imide | g | - | - | - | - | - | - | - | - | - | - | - |
| Organic solvent | Heptane | g | - | - | - | - | - | - | - | - | - | - | 80 |
| Total mass of (A), (B), (C), and (D) | | g | 109 | 109 | 109 | 109 | 109 | 109 | 109 | 108 | 89 | 101 | 109 |
| Mass of (B) when (A) is 100 g | | g | 40 | 40 | 40 | 40 | 40 | 40 | 40 | 40 | - | - | - |
| Mass of (A) when (C) is 100 g | | g | 25 | 25 | 25 | 25 | 25 | 25 | 25 | 25 | - | - | - |
| Mass of (D) when total mass of (A), (B), (C), and (D) is 100 g | | g | 0.92 | 0.92 | 0.92 | 0.92 | 0.92 | 0.92 | 0.92 | - | 1.12 | 0.99 | 0.92 |
| Evaluation results | Fluidity at 25°C | - | A | B | A | B | D | D | D | B | B | E | C |
| | Fluidity at 80°C | - | A | A | A | A | C | C | C | B | B | E | C |
| | Adhesion to PP bumper substrate | - | A | A | A | A | A | A | A | A | C | Not evaluable | A |
| | Adhesion to ABS substrate | - | A | A | A | A | A | A | A | A | A | Not evaluable | C |
| | Adhesion to PET substrate | - | A | A | A | A | A | A | A | A | A | Not evaluable | C |
| | Initial antistatic properties | - | A | A | A | A | A | A | A | C | A | Not evaluable | Not evaluable |
| | Long-term antistatic properties | - | A | A | A | A | A | A | A | C | A | Not evaluable | Not evaluable |

Discussion of Results of Tables 1 and 2

It was shown that the modified polyolefin resin compositions (a) to (r) obtained in Examples 1 to 18 maintained fluidity immediately after production at both 25°C and 80°C. It was also shown that the modified polyolefin resin compositions (a) to (r) obtained in Examples 1 to 18 had good adhesion to each of the PP bumper substrate, the ABS substrate, and the PET substrate. In contrast, the resin composition (s) obtained in Comparative Example 1 exhibited significantly poor initial antistatic properties and long-term antistatic properties since the ionic liquid (D) was not used. The resin composition (t) obtained in Comparative Example 2 exhibited significantly poor adhesion to PP since the modified polyolefin resin (A) was not used. In Comparative Example 3, since the polyetheramine (B) was not used, the resin precipitated, and it was not possible to produce a resin composition itself. In Comparative Example 4, since the compound having a polymerizable unsaturated group (C) was not used, the adhesion to the ABS substrate and the adhesion to the PET substrate were significantly poor.

**Claims**

1. A modified polyolefin resin composition comprising an acid-modified polyolefin resin (A), a polyetheramine (B), a compound having a polymerizable unsaturated group (C), and an ionic liquid (D).

2. The modified polyolefin resin composition according to claim 1, wherein a cation constituting the ionic liquid (D) is at least one cation selected from the group consisting of tetraalkylammonium cations, imidazolium cations, pyridinium cations, pyrazolium cations, pyrrolium cations, pyrrolinium cations, pyrrolidinium cations, and piperidinium cations.

3. The modified polyolefin resin composition according to claim 1, wherein the ionic liquid (D) is contained in an amount of 0.1 to 20 parts by mass per 100 parts by mass of the modified polyolefin resin composition.

4. The modified polyolefin resin composition according to claim 1, wherein the cation of the ionic liquid (D) has a polymerizable unsaturated group.

5. The modified polyolefin resin composition according to claim 1, wherein the acid-modified polyolefin resin (A) is contained in an amount of 5 to 120 parts by mass per 100 parts by mass of the compound having a polymerizable unsaturated group (C).

6. The modified polyolefin resin composition according to claim 1, wherein the compound having a polymerizable unsaturated group (C) comprises a compound having a hydroxyl group and one or more polymerizable unsaturated groups.

7. The modified polyolefin resin composition according to claim 1, wherein the compound having a polymerizable unsaturated group (C) comprises a compound having an alkyleneoxy group and/or a linear or branched alkyl group having 1 to 20 carbon atoms and one or more polymerizable unsaturated groups.

8. The modified polyolefin resin composition according to claim 1, wherein the polyetheramine (B) is contained in an amount of 6 to 100 parts by mass per 100 parts by mass of the acid-modified polyolefin resin (A).

9. The modified polyolefin resin composition according to claim 1, wherein the polyetheramine (B) has a polyether chain, and the polyether chain has a structure comprising at least one selected from the group consisting of:

    a structure represented by $-(O\text{-}CH_2CH_2)x\text{-}$, wherein $x$ is an integer from 2 to 120,
    a structure represented by $-(O\text{-}CH_2CH(CH_3))y_1\text{-}$, wherein $y_1$ is an integer from 2 to 90,
    a structure represented by $-(O\text{-}CH_2CH_2CH_2)y_2\text{-}$, wherein $y_2$ is an integer from 2 to 90,
    a structure represented by $-(O\text{-}CH_2CH_2CH_2CH_2)z_1\text{-}$, wherein $z_1$ is an integer from 2 to 80,
    a structure represented by $-(O\text{-}CH(CH_3)CH_2CH_2)z_2\text{-}$, wherein $z_2$ is an integer from 2 to 80,
    a structure represented by $-(O\text{-}CH_2CH(CH_3)CH_2)z_3\text{-}$, wherein $z_3$ is an integer from 2 to 80, and
    a structure represented by $-(O\text{-}CH_2CH_2CH(CH_3))z_4\text{-}$, wherein $z_4$ is an integer from 2 to 80.

10. The modified polyolefin resin composition according to claim 1, wherein the polyetheramine (B) has a primary amino group or a secondary amino group at one end thereof, and the polyetheramine (B) has a weight average molecular weight (Mw) of 200 to 50000.

11. The modified polyolefin resin composition according to claim 1, wherein the polyetheramine (B) has an HLB value of 2 to 20.

12. The modified polyolefin resin composition according to claim 1, wherein the compound having a polymerizable unsaturated group (C) has a weight average molecular weight (Mw) of 5000 or less.

13. The modified polyolefin resin composition according to claim 1, wherein the compound having a polymerizable unsaturated group (C) comprises

> a compound having a hydroxyl group and one or more polymerizable unsaturated groups, and
> a compound having an alkyleneoxy group and/or a linear or branched alkyl group having 1 to 20 carbon atoms and one or more polymerizable unsaturated groups.

14. A cured product obtained by curing the modified polyolefin resin composition of any one of claims 1 to 13.

15. An ink comprising the modified polyolefin resin composition of any one of claims 1 to 13.

16. An adhesive comprising the modified polyolefin resin composition of any one of claims 1 to 13.

17. A primer comprising the modified polyolefin resin composition of any one of claims 1 to 13.

18. A paint comprising the modified polyolefin resin composition of any one of claims 1 to 13.

19. An in-mold coating paint comprising the modified polyolefin resin composition of any one of claims 1 to 13.

## INTERNATIONAL SEARCH REPORT

| | International application No. |
|---|---|
| | **PCT/JP2024/010867** |

**A. CLASSIFICATION OF SUBJECT MATTER**

*C08L 23/26*(2006.01)i; *C08F 2/44*(2006.01)i; *C08F 8/46*(2006.01)i; *C08F 255/02*(2006.01)i; *C08K 5/19*(2006.01)i; *C08K 5/101*(2006.01)i; *C08L 71/02*(2006.01)i; *C09D 4/02*(2006.01)i; *C09D 7/63*(2018.01)i; *C09D 11/00*(2014.01)i; *C09D 151/06*(2006.01)i; *C09J 4/02*(2006.01)i; *C09J 151/06*(2006.01)i
FI: C08L23/26; C08F2/44 C; C08F8/46; C08F255/02; C08K5/101; C08K5/19; C08L71/02; C09D4/02; C09D7/63; C09D11/00; C09D151/06; C09J4/02; C09J151/06

According to International Patent Classification (IPC) or to both national classification and IPC

**B. FIELDS SEARCHED**

Minimum documentation searched (classification system followed by classification symbols)

C08L23/26; C08F2/44; C08F8/46; C08F255/02; C08K5/19; C08K5/101; C08L71/02; C09D4/02; C09D7/63; C09D11/00; C09D151/06; C09J4/02; C09J151/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-001334 A (MITSUBISHI CHEMICAL CORPORATION) 07 January 2010 (2010-01-07)<br>claims 1-4, paragraphs [0001]-[0005], [0120]-[0137] examples 1-3 | 1-19 |
| A | JP 2011-094047 A (NIPPON PAPER CHEMICALS CO., LTD.) 12 May 2011 (2011-05-12)<br>claims 1-7, paragraphs [0007], [0093]-[0094], [0101], example 7 | 1-19 |
| A | JP 2005-097596 A (SANYO CHEMICAL INDUSTRIES, LTD.) 14 April 2005 (2005-04-14)<br>claims 1, 7, paragraph [0001] | 1-19 |
| A | JP 2007-070370 A (KANSAI PAINT CO., LTD.) 22 March 2007 (2007-03-22)<br>claim 1 | 1-19 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/010867** |

### C.    DOCUMENTS CONSIDERED TO BE RELEVANT

| Category* | Citation of document, with indication, where appropriate, of the relevant passages | Relevant to claim No. |
|---|---|---|
| A | JP 2018-199788 A (MITSUBISHI CHEMICAL CORPORATION) 20 December 2018 (2018-12-20) <br>      paragraphs [0088]-[0094] | 1-19 |

Form PCT/ISA/210 (second sheet) (July 2022)

## INTERNATIONAL SEARCH REPORT
### Information on patent family members

International application No.

**PCT/JP2024/010867**

| Patent document cited in search report | | | Publication date (day/month/year) | Patent family member(s) | | | Publication date (day/month/year) |
|---|---|---|---|---|---|---|---|
| JP | 2010-001334 | A | 07 January 2010 | (Family: none) | | | |
| JP | 2011-094047 | A | 12 May 2011 | (Family: none) | | | |
| JP | 2005-097596 | A | 14 April 2005 | (Family: none) | | | |
| JP | 2007-070370 | A | 22 March 2007 | US claim 1 | 2006/0052493 | A1 | |
| | | | | GB | 2418923 | A | |
| | | | | FR | 2874927 | A1 | |
| | | | | CN | 1743391 | A | |
| JP | 2018-199788 | A | 20 December 2018 | (Family: none) | | | |

Form PCT/ISA/210 (patent family annex) (July 2022)

REFERENCES CITED IN THE DESCRIPTION

**Patent documents cited in the description**

- JP S5975958 A
- JP S6099138 A
- JP H0616746 A
- JP H0812913 A
- JP 2009108259 A
- JP 2020033483 A